(19) Europäisches Patentamt

European Patent Office

Office européen des brevets

(11) **EP 1 331 564 A1**

(12) **EUROPEAN PATENT APPLICATION**

(43) Date of publication:
**30.07.2003 Bulletin 2003/31**

(51) Int Cl.⁷: **G06F 9/50**

(21) Application number: **02001720.8**

(22) Date of filing: **24.01.2002**

| (84) Designated Contracting States: **AT BE CH CY DE DK ES FI FR GB GR IE IT LI LU MC NL PT SE TR** Designated Extension States: **AL LT LV MK RO SI** | (71) Applicant: **SIEMENS AKTIENGESELLSCHAFT** **80333 München (DE)** (72) Inventor: **Priem, Xavier** **22560 Trebeurden (FR)** |
|---|---|

(54) **Fuzzy logic based intelligent load control for distributed environment**

(57)     A load control system for a Multi-Application/ Process Multi-media&Telecommunication System is disclosed. A typical Internet Services Server does not provide any support to limit the rate of connections per second and/or the rate of requests per second to dynamically adapt to server load and/or satisfy a policy constraint on service guarantees. As a result, it is likely for an Internet Services Server to become saturated (overloaded) when servicing content to clients. In an overloaded condition, a typical server suffers severe performance degradation, with the overall throughput falling significantly and client connectivity and perceived performance (such as the delay in completing the request) becoming unpredictable. The invention solves these problems by a mechanism which is based on the use of a fuzzy logic expert system. The fuzzy logic expert system computes in a first step (NOM, Normal Operation Mode) an overload level (load monitoring and overload detection) for the system according to the monitored resources (like CPU, memory, Ios, queues...) and to a predefined fuzzy logic rule-based scenario. If a defined overload level is reached, then the FLEXSYS (Fuzzy Logic EXpert SYStem) computes in a second step (OOM, Overload Operation Mode) which overload handling actions (overload handling) have to be taken (according to a second FLEXSYS scenario).

**EP 1 331 564 A1**

**Description**

1. Introduction

Within the Siemens Surpass product family, the value-added IP services become more and more important and show new needs in terms of performance and reliability. This is the reason why the running environment of these services has to be realized for carrier-grade scaling and availability. Like in the EWSD, solid overload detection and handling mechanisms are the precondition for an optimized use of the resources and a higher robustness of the system.

It has been chosen to develop and implement these services on the so-called Commercial Platform (COPL) which relies on a SUNtm machine running Sun's Solaris tm v2.6 (in future v8) operating system.

The system described in this document takes into account the fact that the COPL deals with other kinds of applications than the EWSD does. These applications are from two groups: a first group that defines the Open Service Platform (OSP) and a second group that defines the Packet Control Unit (PCU). All these applications deal with IP-networks and IP-services. They need other measurements and handling mechanisms than the one used in the EWSD processes.

A typical Internet Services Server does not provide any support to limit the rate of connections per second and/or the rate of requests per second to dynamically adapt to server load and/or satisfy a policy constraint on service guarantees. As a result, it is likely for an Internet Services Server to become saturated (overloaded) when servicing content to clients. In an overloaded condition, a typical server suffers severe performance degradation, with the overall throughput falling significantly and client connectivity and perceived performance (such as the delay in completing the request) becoming unpredictable.

In addition to susceptibility to overload, current servers lack the ability to monitor the incoming load and differentiate between different types of services, especially in scenarios such as virtual hosting in which multiple services (e.g., different Internet service applications) may be co-located on the same server platform. Without overload protection and service differentiation, a typical server would only be able to provide "best effort" service to its customers.

2. How has this problem been solved up to now?

2.1 Usually a predefined threshold (determined during load test in a test-lab) is defined per application (number of parallel sessions, maximal number of waiting events in the queue or more generic resources like CPU or memory use) and the given application rejects all new incoming load if this threshold is reached.

2.2 Another method is to add a Load Balancer before the considered machine in order to tail the incoming load between a given set of similar machines. In this method, the threshold used in 2.1 is used in this extra-machine. Load Balancing is more used in order to avoid rejecting new incoming load. It does not solve overload for a single machine.

3. In what manner does your invention solve the technical problem indicated (show advantages)?

The invention relies on a flexible and adaptable overload detection and overload handling mechanism.

This mechanism is based on the use of a fuzzy logic expert system (developed by the author). This fuzzy logic expert system computes in a first step (NOM, Normal Operation Mode) an overload level (load monitoring and overload detection) for the system according to the monitored resources (like CPU, memory, Ios, queues...) and to a predefined fuzzy logic rule-based scenario. If a defined overload level is reached, then the FLEXSYS (Fuzzy Logic EXpert SYStem) computes in a second step (OOM, Overload Operation Mode) which overload handling actions (overload handling) have to be taken (according to a second FLEXSYS scenario).

The complete load control system can be seen in the following schematic:

Figure 1: Fuzzy Logic Based Load Control System
for Multimedia/Telecommunication Platforms

# 1 REALIZATION 4

## 1.1 Overload Detection 4
### 1.1.1 Local COPL Overload Detection 4
#### 1.1.1.1 Load Monitoring Process 5
#### 1.1.1.2 Monitored resources 6
##### 1.1.1.2.1 CPU (NOM/OOM) 6
##### 1.1.1.2.2 MEMORY (NOM/OOM) 6
##### 1.1.1.2.3 I/O (NOM/OOM) 7
##### 1.1.1.2.4 OVERALL SYSTEM OVERLOAD (NOM/OOM) 7
##### 1.1.1.2.5 APPLICATIONS SPECIFIC RESOURCES (OOM only) 8
##### 1.1.1.2.6 Transient Parameters (NOM/OOM) 8
#### 1.1.1.3 The Normal Operation Mode (NOM) 8
##### 1.1.1.3.1 Overview of fuzzy logic used in NOM 9
##### 1.1.1.3.2 Fuzzification stage 10
##### 1.1.1.3.3 Inference process 11
##### 1.1.1.3.4 Defuzzification 13
##### 1.1.1.3.5 COPL Overload level 13
#### 1.1.1.4 The Overload Operation Mode (OOM) 14
##### 1.1.1.4.1 Overview of fuzzy logic used in OOM 14
##### 1.1.1.4.2 COPL Overload level 15
##### 1.1.1.4.3 Application/process specific overload level 15

## 1.2 Overload Treatment 16
### 1.2.1 Local COPL Overload Treatment 16
#### 1.2.1.1 Overload Treatment Process (OTP) 16
##### 1.2.1.1.1 Overload Treatment Reduction Process (OTRP) 17
###### 1.2.1.1.1.1 Overload treatment identification 17
###### 1.2.1.1.1.2 Internal Strategies of Load Rejection and Reduction 17
##### 1.2.1.1.2 Overload Treatment Communication Process (OTCP) 17
###### 1.2.1.1.2.1 Communicating Overload Level to COPL Applications 18
### 1.2.2 Communicating Overload Level to Other Platforms 18
### 1.2.3 Applications Overload Treatment 18

Figure 1: Fuzzy Logic Based Load Control System for Multimedia/Telecommunication Platforms .........2
Figure 2: Fuzzy Logic Based Load Control System for Multimedia/Telecommunication Platforms .........4
Figure 3: Operation modes of the LMP (NOM/OOM) ................................................................5
Figure 4 COPL: CPU load level and its fuzzy equivalent level................................................6
Figure 5 COPL: Memory charge level and its fuzzy equivalent level ......................................7
Figure 6 COPL: I/Os usage level and its fuzzy equivalent level.............................................7
Figure 7: Fuzzy Logic applied to NOM .......................................................................................9
Figure 8: a typical (and very true) rule example ........................................................................9
Figure 9: NOM fuzzy inference engine.......................................................................................10
Figure 10: definition of the CPU fuzzy variable using fuzzy sets..............................................11
Figure 11: NOM fuzzy variables.................................................................................................11
Figure 12: output of all the rules within the fuzzy model...........................................................12
Figure 13: accumulation of the output variable .........................................................................12
Figure 14: Fuzzy Logic applied to OOM ....................................................................................14
Figure 15: OOM fuzzy inference engine.....................................................................................15
Figure 16: output of all the rules within the fuzzy model...........................................................15
Figure 17: the Overload Treatment Process in the COPL .........................................................16

## 1 Realization

The invention relies on a flexible and adaptable overload detection and overload handling mechanism. Thi mechanism is based on the use of a fuzzy logic expert system (developed by the author). This fuzzy logic exper system computes in a first step (NOM, Normal Operation Mode) an overload level (overload detection) for the system according to monitored resources (like CPU, memory, Ios, queues...) and to a predefined fuzzy logic rule based scenario. If a defined overload level is reached, then the FLEXSYS (Fuzzy Logic EXpert SYStem) compute in a second step (OOM, Overload Operation Mode) which overload handling measures (overload handling) have to be taken (according to a second FLEXSYS scenario).

The complete load control system can be seen in the following schematic:

*Figure 2: Fuzzy Logic Based Load Control System*
*for Multimedia/Telecommunication Platforms*

### 1.1 Overload Detection

Overload detection encompasses a set of stages like local and remote resources load monitoring, calculation of an overall overload level, system status switching and start of the overload treatment.

### 1.1.1 Local COPL Overload Detection

Like in CP load control, the COPL overload levels rank from 1 to 6.

However, in contrast to the concept of CP overload control there are no explicit load states defined for the COPL, i.e. the COPL is considered not to be under overload if the "over-" load level is set to 0. (Nevertheless the transition between the level 0 and level 1 is treated differently than the transition between on to the other levels (1...6).)

#### 1.1.1.1 Load Monitoring Process

The CoPl's operating system (UNIX, SUN Solaris) consists of applications and processes that are called by the kernel (endless loop) depending on their priority. In this environment, the LMP (Load Monitoring Process) should run as a single process. It should be quick and time interrupt driven. It should get a higher priority but not use more than a predefined amount of memory and CPU time pro run (budget defined in Erl).

The LMP has to monitor different kinds of resources:

➢ CPU usage

➢ Memory usage

➢ I/O usage

➢ Overall System Overload

➢ Applications specific resources

The LMP must have two running modes:

➢ a basic one in non-overloaded operation in order to detect an overload situation by checking a restricted amount of main resources like cpu, memory and ios,
➢ an overload mode running under overload situation, which makes a more detailed analysis of the overload situation and that runs with a higher frequency and checks an higher amount of resources
(not only cpu, memory and ios, but also application specific ones).

Under normal situation, the LMP only checks the operating status of the whole system and, in case of detection of a possible overload situation, switches to its overloaded mode.

In overloaded mode, the LMP checks the same way as the basic mode but with a higher frequency, a second time-loop checks extra resources in order to possibly detect the overload responsible application.

Figure 3: Operation modes of the LMP (NOM/OOM)

The left part of the Overload Operation Mode (OOM) is very similar to the Normal Operation Mode (NOM); the main difference is the control loop frequency. If the chosen programming technique allow it, the two processes could be merged into one (with two threads).

The NOM must be a light process, checking a restricted fix amount of main resources. It is not correlated to the running applications on the COPL. It says if the COPL (globally) should enter the OOM. This part of the LPM is the same for all versions of the COPL, like for example the PCU or the OSP. It can rely on an optimized Fuzzy Logic Kernel running in C or Assembler (for higher speed), a prototype is available from the SRIT. Its configuration can be adapted through its FL-Model configuration file (like a script or database). An other aspect is that the NOM conserves some values between its runs and uses them to eliminate some kinds of problems like short-time overloads that do not require an overload treatment. Typically the NOM calculates the "climbing factor" or increase/decrease coefficient (df/dt).

The OOM is should stay a light process (not more than 50% more resource consumption than the NOM), checking a higher amount of resources (the same as NOM and additional application specific resources). It relies on a Fuzzy Logic driven expert system that can compute which measures have to be taken in order to drive the COPL back to the NOM. Its configuration can be adapted through its FL-Model configuration file (like a script or database). A kind of overload responsibility check is performed by the OOM. According to the results, some signals are sent and actions are taken to the diverse components of the COPL. It decides how the Overload Treatment has to work. The OOM FL-Model depends on the applications running on the COPL.

1.1.1.2 Monitored resources

**1.1.1.2.1 CPU (NOM/OOM)**

The global CPU load (in opposition to the process cpu load) can be checked using standard OS functions or UMLA API. The returned value is a percentage of the whole cpu capacity (in a further step, it could be a per-cpu measurement in case of multiple cpu or ...). Before using this raw measurement, it can be useful to go through an intermediate state, making the cpu raw measurement correspond to a cpu overload level (OVL_CPU). This intermediate statement is mostly useful if the NOM does not rely on Fuzzy Logic, indeed the FL performs automatically such conversions.

**CPU**

| Usage | OVL_CPU |
|-------|---------|
| 0% | 0% |
| 10% | 0% |
| 20% | 3% |
| 30% | 5% |
| 40% | 10% |
| 50% | 15% |
| 60% | 20% |
| 70% | 30% |
| 80% | 45% |
| 90% | 65% |
| 100% | 100% |

*Figure 4 COPL: CPU load level and its fuzzy equivalent level*

**1.1.1.2.2 MEMORY (NOM/OOM)**

The global MEMORY load (in opposition to the process memory occupancy) can be checked using standard OS functions or UMLA API. The returned value is a percentage of the whole MEMORY capacity (in a further step, it could be a per-cpu measurement in case of multiple CPU or...). Before using this raw measurement, it can be useful to go through an intermediate state, making the MEMORY raw measurement correspond to a MEMORY overload level (OVL_ MEM). This intermediate statement is mostly useful if the NOM does not rely on Fuzzy Logic, indeed the FL performs automatically such conversions.

**MEMORY**

| Usage | OVL_MEM |
|-------|---------|
| 0% | 0% |
| 10% | 3% |
| 20% | 5% |
| 30% | 10% |
| 40% | 25% |
| 50% | 50% |
| 60% | 75% |
| 70% | 90% |
| 80% | 95% |
| 90% | 100% |
| 100% | 100% |

Figure 5 COPL: Memory charge level and its fuzzy equivalent level

### 1.1.1.2.3 I/O (NOM/OOM)

The global I/O load (in opposition to the process memory occupancy) can be checked using standard OS functions or UMLA API. The returned value is a percentage of the whole I/O capacity (in a further step, it could be a per-cpu measurement in case of multiple CPU or...). Before using this raw measurement, it can be useful to go through an intermediate state, making the I/O raw measurement correspond to a I/O overload level (OVL_IOS). This intermediate statement is mostly useful if the NOM does not rely on Fuzzy Logic, indeed the FL performs automatically such conversions.

**I/Os**

| Usage | OVL_IOS |
|-------|---------|
| 0% | 0% |
| 10% | 3% |
| 20% | 5% |
| 30% | 10% |
| 40% | 15% |
| 50% | 20% |
| 60% | 30% |
| 70% | 40% |
| 80% | 55% |
| 90% | 75% |
| 100% | 100% |

Figure 6 COPL: I/Os usage level and its fuzzy equivalent level

### 1.1.1.2.4 OVERALL SYSTEM OVERLOAD (NOM/OOM)

Being interconnected to other Surpass components that interact with it, the COPL has to get information about the whole system health and communicate its own status to the rest of the system, if it enters an overload status.

For the LMP, it is important to keep informed about the overall overload situation of its connected neighbors inside the considered Surpass configuration. Overload Status Messages are supposed to be sent from the overloaded components to the COPL (belonging in the same way to the overall overload control system).

A kind of priority has to be defined within the LMP in order to react as a slave inside the overall overload handling of Surpass. If the central call control enters the overload status 6, then it sends a message to the possibly responsible units in order to tell them to reduce the admission of new calls inside the system. This should also work specially in the case where the COPL hosts the PCU. The PCU can be at the origin of new call attempts. The PCU has to react on some congestion signals coming from the central call control system (EWSD CP). The COPL is notified via overload messages from the CP.

**1.1.1.2.5 APPLICATIONS SPECIFIC RESOURCES (OOM only)**

Once the OOM is reached, it is compulsory to detect which part(s) of the whole system is (are) responsible for the overload situation. To reach this, one needs some applications specific resources monitoring. Most of the applications use the same kind of resources. We regroup these ones into five main types (similar to the ones in the LTG load control and related to the application configuration file within the UMLA):

> communication blocks,

> timer blocks,

> heap blocks (UMLA : queues),

> memory blocks (UMLA : pools),

> transaction control blocks.

These resources can be controlled either by the UMLA and/or the OS. The LMP will then access the resources through one of them. The LMP may consider the overall consumption of these resources and determine the percentile use for each application. These common resources are essential for the well functioning of the COPL and the extent of their pools is designed to be sufficient. But their availability under heavy load must be monitored. This supervision is not meant to be a means for nicely tuned load regulation measures but it is an "emergency break". They will be used for the determination of the application(s) responsible for the overload situation.

**1.1.1.2.6 Transient Parameters (NOM/OOM)**

These parameters are useful in order to avoid a too rapid reaction against local overload situations that are not significant and therefore must not start overload treatment procedures. It is still under analysis which form these parameters will take. The simplest form can be the tracing of the time interval since possible overload status entry. The next step is to tune this interval so that the system stays stable and reacts only on higher overload duration. A second form could be the derivation of the overload level over the time to determine if there is a possible prognostic to do with its evolution. These options have to be tested to determine which is the most optimal one for the considered scenario.

1.1.1.3 The Normal Operation Mode (NOM)

The NOM is in charge of controlling the (over-) load level during normal operation. According to the new calculated level, it eventually switches to the Overload Operation Mode (OOM). In order to make this level calculation, the NOM needs the in 1.1.1.2 described inputs (only the system relative ones). Using the fuzzy logic descriptive model, it is easy to mix these inputs together and get the overload level using a set of basic rules.

Figure 7: Fuzzy Logic applied to NOM

### 1.1.1.3.1 Overview of fuzzy logic used in NOM

In NOM, every CHK_TIME sec, the predefined resources are checked (through COPL OSIUMLA) and are stored for following treatment. The next step consists in fuzzifying these crisp values into fuzzy variables. The sequence of fuzzy logic (inference) processing can be broadly divided into two functions: inference and defuzzification. The inference process begins with the processing of the production rules. Individual rules consist of a condition block (also called the antecedent or "IF" block) and a conclusion block (known as the consequent or "THEN" block). The inference process proceeds from the conditions to the conclusion, and then to the logical sum. To get a usable output, however, a deffuzifier operation must be performed to convert the fuzzy values back to a fixed, discrete output value, here the overload level for instance.

Figure 8: a typical (and very true) rule example

All traditional logic operators (and, or, not...) are available and also new ones that work only for fuzzy logic. Collecting such rules is easier than deducing complicated mathematical formulas that have to be re-engineered with the introduction of new variables in the system. The rules can be deduced from measurements and observations, using a quite straightforward intuitive deduction. For example, experience (thumb rules) in system tuning can be directly reused.

A first proposal for the NOM fuzzy model is done here according to the requirements emitted by ICN WN CC SE 3. These requirements impose to the NOM to stay platform specific and not application specific. That means that only a part of the monitored resources will not be taken into account in the NOM fuzzy model. These remaining resources are to be used in the OOM anyway. The fuzzy kernel uses a fuzzy model definition file "overload_detection_model.fuz".

Figure 9: NOM fuzzy inference engine

Figure 9: fuzzy variable cpu (sets)

### 1.1.1.3.2 Fuzzification stage

A crisp input is a parameter coming from the monitoring system (cpu, memory, ios, CP-OVL), it is a number comprised in a predefined interval, for example for the cpu usage input parameter, the CPU crisp input is defined as a real number between 0 and 1 (or 0% and 100%). For this crisp input, a fuzzy variable has to be defined using "sets" of the fuzzy language:

We define here eleven intensity levels of cpu usage (0... 10), ranking from 0 to 1 for the crisp input parameter. For example, the definition of level 3 of cpu usage is defined through a trapeze starting by 20% climbing to the maximum of validity from 27.5%, staying at maximum till 32.5% and decreasing to zero by 40%.

E.g. for an input cpu usage value of 25%, we say that the cpu usage fuzzy set 3 (level 3) is true with 65% validity. It is also the case for level 2, that means that, when cpu usage is equal to 25%, CPU is at the same time in level 2 and level 3 with 65% validity for each. The graphical representation of the CPU fuzzy variable corresponds to a part of the fuzzy model file:

```
[SETS]

CPU_0      { XSTART=0 XSTOP=1 XLEN=101 FUNCT=TRAPEZE(0.000,0.000,0.025,0.100,0) }

CPU_1      { XSTART=0 XSTOP=1 XLEN=101 FUNCT=TRAPEZE(0.000,0.075,0.125,0.200,0) }

CPU_2      { XSTART=0 XSTOP=1 XLEN=101 FUNCT=TRAPEZE(0.100,0.175,0.225,0.300,0) }

CPU_3      { XSTART=0 XSTOP=1 XLEN=101 FUNCT=TRAPEZE(0.200,0.275,0.325,0.400,0) }

CPU_4      { XSTART=0 XSTOP=1 XLEN=101 FUNCT=TRAPEZE(0.300,0.375,0.425,0.500,0) }

CPU_5      { XSTART=0 XSTOP=1 XLEN=101 FUNCT=TRAPEZE(0.400,0.475,0.525,0.600,0) }

CPU_6      { XSTART=0 XSTOP=1 XLEN=101 FUNCT=TRAPEZE(0.500,0.575,0.625,0.700,0) }
```

```
CPU_7      { XSTART=0 XSTOP=1 XLEN=101 FUNCT=TRAPEZE(0.600,0.675,0.725,0.800,0) }

CPU_8      { XSTART=0 XSTOP=1 XLEN=101 FUNCT=TRAPEZE(0.700,0.775,0.825,0.900,0)
           }

CPU_9      { XSTART=0 XSTOP=1 XLEN=101 FUNCT=TRAPEZE(0.800,0.875,0.925,1.000,0) }

CPU_10     { XSTART=0 XSTOP=1 XLEN=101 FUNCT=TRAPEZE(0.900,0.975,1.000,1.000,0) }

[VARIABLES]

1 CPU   {0,1,2,3,4,5,6,7,8,9,10} IN
```

*Figure 10: definition of the CPU fuzzy variable using fuzzy sets*

Extracting the validity of each fuzzy set for each variable according to its crisp value is called "Fuzzification" of the input crisps.

*Figure 11: NOM fuzzy variables*

Once all input crisps have been fuzzified, the inference process is entered.

### 1.1.1.3.3 Inference process

The inference process reads the fuzzy rule base and evaluates its contained rules according to the fuzzy sets coming from the fuzzification stage. These rules look quite similar to standard logic rules. Like we described them in Figure 8, the fuzzy rules are build following the well-known IF THEN construction. Where the difference between standard (Boolean) logic and fuzzy logic takes place, it is in the values taken by the operands and the mathematical definition of the operators. Where "true" (1) and "false" (0) are the only possible values for operands in standard logic, the fuzzy logic allows operands to take continuous or discrete values between 0 and 1 (in its normalized form). Some logical operators are defined in the standard logic and also in the fuzzy logic:

| NOT | ! | ¬ | ‾ |
|-----|---|---|---|
| AND | & | ∧ | . |
| OR | | | ∨ | + |
| XOR | | | ⊕ |

A characteristic of the fuzzy logic operators is the possibility to change their mathematical definition according to the context:

$$A \text{ AND } B = MIN(A,B) \text{ but also } A \text{ AND } B = ALGP(A,B) \text{ (algebraic product)}$$

$$A \text{ OR } B = MAX(A,B) \text{ but also } A \text{ OR } B = ALGS(A,B) \text{ (algebraic sum)}$$

$$NOT A = 1 - A$$

According to these definitions, it is understandable how fuzzy logic allows logic with values between 0 and 1 (and not only 0 or 1). Again the very true rule (Figure 8):

Lets say that if CPU_LOAD_VERY_HIGH = 0.7 (after fuzzification), MEMORY_LOAD_VERY_HIGH = 0.5, IOS_LOAD_VERY_HIGH = 0.9,
then the assessment
**IF** *CPU_LOAD_VERY_HIGH* **AND** *MEMORY_LOAD_VERY_HIGH* **AND** *IOS_LOAD_VERY_HIGH* **THEN** *OVERLOAD_LEVEL_VERY_HIGH* **WITH** *HIGHEST PROBABILIT*
becomes, if we take MIN as AND operator definition,

OVERLOAD_LEVEL_VERY_HIGH is true with 50% (=min(0.7,min(0.5,0.9)) x 1.0)

*Figure 12: output of all the rules within the fuzzy model*

When all riles have been calculated, the resulting sets of the output variable have to be "accumulated". This is done by composing all the sets together using an "accumulation" operator, like the logical sum (max operator).

*Figure 13: accumulation of the output variable*

The result of this operation can be seen in the lower part of the Figure 13. One can see that the different rules (here only given as example in Figure 12) that generate the output result.

### 1.1.1.3.4 Defuzzification

The last step performed by the fuzzy logic kernel within the NOM is the deffuzification. As we have seen in the previous step, the fuzzy logic delivers an output result in form of a graph (Figure 13). This result is not usable in this form, it needs to converted into a crisp value to be exploitable in the rest of the NOM.

Again, it is possible to use diverse methods or operators to get a crisp value out of the resulting curve. Possible operators are the COG (center of gravity), the MAXMAX (maximum of maximums). Here we propose to use the COG. This operator permits taking into account all the results of all the rules, where the MAXMAX is a pessimistic operator. The COG operator search the center of gravity of the surface between zero (y axe) and the resulting curve from the inference step. In our example, the COG is 0.4. With MAXMAX we would have got 0.65 (this does not take into account the result of some rules, giving also a result around 0.2 and 0.4).

Further investigations have to be done in order to determine the best-suited operator for the deffuzification.

### 1.1.1.3.5 COPL Overload level

The value delivered by the fuzzy logic model of the NOM ranks from 0 to 1; so that if we want to stay compatible with the CP/LTG-Overload levels, we must re-scale from [0:1] to [0;1;2;3;4;5;6].

The fuzzy logic model is designed to run with a limited amount of sets for a given variable. If we consider the output variable COPL_OVL having 7 sets : 0,1,2,3,4,5,6, then we can get the overload level by fuzzifying the crisp into sets validity and then take the maximum validity.

The other method is to re-scale linearly from 0:1 to 0;1;2;3;4;5;6. This solution should be taken only in the case of cpu resource shortage. Indeed it is not as efficient as the first solution.

### 1.1.1.4 The Overload Operation Mode (OOM)

If the NOM detects an overload level superior to a given threshold, it switches to the Overload Operation Mode (OOM) in order to determine the reactions needed to return to the Normal Operation Mode (NOM). Within the OOM, measurements are made (resource checking) and combined to determine which process or application has to be reduced, alarmed or made aware of the overload situation.

*Figure 14: Fuzzy Logic applied to OOM*

**1.1.1.4.1 Overview of fuzzy logic used in OOM**

The general function of the fuzzy logic in the OOM is similar to the one for the NOM. Only the time interval, the variables checked and the output treatment are different. Once the OOM is entered, the time interval between two overload checks (OVL_CHK_TIME) is smaller than the one used by the NOM (CHK_TIME). This ensures a quicker return to the NOM if no more overload is present.

The same fuzzy core functions and interfaces are used. The fuzzy kernel takes a fuzzy model definition file "overload_treatment_model.fuz":

➢ the input variables encompass the ones of the NOM and some application specific resources,

➢ the output variables define again the overload level for the whole COPL but also application specific overload levels (degree of action to be taken for this particular application),

➢ the COPL overload level is calculated at that step.

The aim of the fuzzy logic in the OOM is to determine a level of overload or responsibility for overload per application/process and also the COPL overload level again. The application/process overload levels will be further used by the Overload Treatment Process (OTP).

We can see in the following figure the fuzzy inference engine used for the OOM:

*Figure 15: OOM fuzzy inference engine*

Figure 16: output of all the rules within the fuzzy model

After the Interference Process step, it is possible to extract rules validity as shown in Figure 16.

These values (or a part of them) will be transmitted to the OTP for further treatment. It is not the usual step that is used for a fuzzy logic expert system. But during the study it appeared to be a good solution to help the OTP program to take some decisions. This rules validity is kept in order to be mixed with the results coming from the defuzzification step.

### 1.1.1.4.2 COPL Overload level

Same as 1.1.1.3.5...

Open issue: shall we use the results of the application specific overload calculation by calculating the COPL overload level at that step or shall we re-use the NOM fuzzy model to control again the resources. Further investigations must be made.

### 1.1.1.4.3 Application/process specific overload level

Each application/process that runs on the COPL needs three blocks to be integrated into the Overload Management System:

- dedicated routines to check its specific resources status,

- an associated fuzzy logic variable (definition of sets),

- a set of rules leading from these resources to a specific overload level.

Depending on the chosen programming technique, these blocks can be integrated either offline or online (database). This issue is open and is not in the scope of this document.

### 1.2 Overload Treatment

After the Overload Detection, Overload Treatment has to be started in order to come back to a non-overloaded situation. The Overload Detection and its associated components deliver a COPL Overload Level, application/process specific Overload Levels and overload rules validity values to the Overload Treatment (OT) program.

According to these inputs, the OT has to decide actions to be taken in order to bring the system back to its normal status. To do this, the OT has to start actions locally (within the COPL) and/or remotely by sending overload messages to the connected equipment.

All actions taken locally belong to the Local COPL Overload Treatment (1.2.1). The other actions depend on the communication of the COPL Overload Level to the other platforms (1.2.2).

### 1.2.1 Local COPL Overload Treatment

The Local COPL Overload Treatment is in charge of taking actions to reduce overload locally on the COPL itself and communicating its overload status to other connected platforms to first avoid new incoming traffic and second inform the system.

### 1.2.1.1 Overload Treatment Process (OTP)

The Overload Treatment Process and its subsystems drive all these features. Four types of mechanisms participate to the OTP:

1. Decision of the actions to be taken,

2. Active or direct local overload reduction,

3. Passive or indirect local overload reduction,

4. Passive or indirect remote overload reduction.

Mechanism 1 and 2 take place in the Overload Treatment Reduction Process. Mechanisms 2 and 3 take place in the Overload Treatment Communication Process (external and internal stages).

*Figure 17: the Overload Treatment Process in the COPL*

### 1.2.1.1.1 Overload Treatment Reduction Process (OTRP)

1.2.1.1.1.1 Overload treatment identification

This process first decides which actions (and action types) have to be taken according to the diverse overload levels and rules validity it becomes from the Load Monitoring Process (LMP). We mean actions here as active or passive, local or remote, increasing or decreasing.

- Active action: action that acts directly through the OS or the UMLA on applications,

- Passive action: action that acts indirectly through a common interface (thresholds in a self-controlled -standalone-application),

- Local action: action acts local on the COPL,

- Remote action: action sends messages through interfaces to external platforms/process,

- Increasing action: action allows more resource consumption,

- Decreasing action: action restricts resource consumption.

Then the OTRP starts the needed overload treatment mechanisms. The OTRP treats itself the local active actions and delegates all the other actions to the Overload Treatment Communication Process (OTCP).
The reason of this separation between OTRP and OTCP is that local active actions distinguish themselves from other ones by their mechanisms; they do not communicate with the concerned application/process but act directly on it through the OS or the UMLA (for example by reducing the allowed amount of cpu time or memory or blocking their communication with the network communication stacks).
The OTCP communicates either locally with COPL hosted applications/processes using messages and/or threshold variables or remotely with other platforms and applications using the messaging system.

1.2.1.1.1.2 Internal Strategies of Load Rejection and Reduction

The fuzzy logic expert system of the OTP enables classes of services/processes to be defined. This means that different priorities can be given to the applications/processes running for the COPL.

*1.2.1.1.1.2.1 Load Reduction*

Internal strategies of load reduction are in that case strategies of attribution (or distribution) of resources to applications/processes according to their overload status and their pre-defined priorities.
CPU, MEMORY and IOS are shared by these applications/processes. It is possible to change the repartition or attributed amounts of these resources for each application through either the OS or the UMLA. If the action takes place without alerting the application with messages, then it belongs to the OTRP, if messages are sent, then it belongs to the OTCP.
If a given application/process has reached a critical overload level and other applications have been given amounts of resources they do not use at that precise time, then a good strategy is to give these resources to the overloaded application/process so that it can accomplish its task and return to a normal load situation. As soon as this is done, the re-routed resources can be given back to their owners.
That means that in overload status, a dynamic resource sharing can be achieved, and that the repartition is done by the fuzzy logic expert system.

*1.2.1.1.1.2.2 Load Rejection*

Internal strategies can also include load rejection actions. These is done by disabling the upcoming service requests. These strategies have to be identified in the next parts of this document (application by application).
If the load rejection action takes place in the COPL without alerting the application with messages, then it belongs to the OTRP, if messages are sent, then it belongs to the OTCP.

**1.2.1.1.2 Overload Treatment Communication Process (OTCP)**

This process is in charge of relaying the overload treatment actions (decided in the OTRP) to local or remote applications/processes/equipment using system messages. These messages can be sent using the UMLA and/or other communication protocols, depending on the destination.
The applications/processes addressed by the OTCP can be of two types, local or remote. Local means here that they run directly on the COPL itself and remote means that they run on some separate equipment and can be commanded through some management protocols.

1.2.1.1.2.1 Communicating Overload Level to COPL Applications

There is an active way of informing applications about changes of the overload level by event and a procedural interface that makes the overload levels available.
The exact mechanism (message type, interface and procedure) has to be defined for each application or process. The diversity of applications, processes and their manufacturer does not allow a common treatment. That is the reason why the overload treatment has to be federate into a single control system that then decides and distributes overload rejection/reduction actions.
Possible means to achieve the communication of the overload levels and actions to the applications and processes are:

- messaging interface,

- UMLA API,

- Open Third Party APIs,

- Network Management Protocols (SNMP...).

All these options will be discussed in dedicated paragraphs for the OSP and the PCU.

### 1.2.2 Communicating Overload Level to Other Platforms

For several load control related purposes load levels need to be distributed by COPL load control to others but the own platform.

Possible means to achieve the communication of the overload levels and actions to the applications and processes are:

- messaging interface (LTG, EWSD, Proxies),

- Network Management Protocols (SNMP...).

### 1.2.3 Applications Overload Treatment

Each time possible, the applications should have a kind of integrated Call Admission Control that checks the last known overload status.

This overload status can be different for each application, forcing it to react differently against the load situation. This allows a higher flexibility for the overload treatment mechanisms.

Depending on the inter-process communication capabilities of the considered application, its dedicated overload status will be delivered to it (OTP/OTRP or OTCP) or will be available for polling from the OTP (OTCP).

According to its overload level, the application can drive different strategies, like delaying or refusing new incoming requests.

The new incoming requests should be stopped, when possible, not in the application itself, but in the processes that are at the beginning of the call/request processing. But, if these processes are used from other applications that are not in an overload situation requiring some overload treatment, then the new incoming requests have to be stopped at the next level, after leaving these processes and before arriving at the considered application. This is done by configuring the fuzzy expert system with the correct set of rules.

Example:

For the CtD application, new incoming requests should be stopped already within the PINT+ GW Application by setting the overload level of the PINT+ GW Application high enough to stop processing of new incoming requests.

If the PINT+ GW Application is shared by other applications than the CtD application and these applications have a higher service priority level, then the overload level of the CtD application shall be set so that it does not authorize new sessions and the PINT+ GW application shall stay as before.

Concretely, if the NOM detects an overload situation, it enters the OOM. The OOM then tests the overload status of the CtD application and the PINT+ GW application. If the CtD application is the only connected application to the PINT+ GW (see Rule 1), then the PINT+ GW application gets a higher overload level and starts rejecting new incoming requests. If the CtD application shares the PINT+ GW with other applications having a higher priority level (see Rule 2), then it becomes itself a higher overload level and starts itself rejecting new session attempts.

It can be translated into two fuzzy logic rules:

Rule 1:

IF      OSP_OVERLOAD_HIGH
AND    CTD_ACTIVE_SESSIONS_HIGH
AND    (NOT PINT+GW_SHARE_HIGH)
THEN   PINT+GW_OVERLOAD_LEVEL_HIGH

Rule 2:

IF      OSP_OVERLOAD_HIGH
AND    CTD_ACTIVE_SESSIONS_HIGH
AND    PINT+GW_SHARE_HIGH
THEN   CTD_OVERLOAD_LEVEL_HIGH

4. Advantages of the invention

Here we develop control mechanisms and policies such that the COPL (i) tracks and avoids non-manageable overload situations before they set in (predictive fuzzy logic rules in the NOM), (ii) avoids also short overload picks (transient fuzzy logic rules in the NOM), and (iii) provides service differentiation between different applications based on specified policies (application specific fuzzy logic rules in the OOM).

With such support a server becomes self-sufficient in preventing overload and can dynamically configure the control mechanisms provided to obtain the desired performance effects. One of the advantages of this approach is

**EP 1 331 564 A1**

that no additional or new equipment needs to be deployed separately to provide similar capabilities.

Further, this permits existing server installations to be upgraded in an application and network transparent manner, i.e., without deeply modifying applications or existing network connectivity.

Another significant advantage is that the control settings provided can be used to track an overload situation as it unfolds, generating notifications or control actions as necessary. This greatly simplifies administration and capacity planning for a server, and by extension for a server farm, thereby reducing system management costs and complexity. This is also applicable to proxies, front-end servers, ...

The provided fuzzy logic programming language authorizes all levels needed for a precise tuning of the overload handling. There is no limit for the granularity of the overload decision and overload treatment models.

Furthermore, the idea to use the results of the rules calculation in combination with the output variables calculation allows a simple description of overload actions to be specially taken. Because a rule describes a precise mix of overload conditions like common resources overflow, application specific queues overflow, this same rule can be taken as decision base for overload handling actions. Every new recognized overload situation can be introduced in the fuzzy logic expert system database and actions can be taken according to it.

The proposed fuzzy logic toolbox allows giving different priorities to the rules used for the overload status calculation. This permits different levels of precision in the overload calculation. More important rules get a higher priority factor.

The proposed fuzzy logic toolbox also allows also dynamic changes. That means, it is possible to couple it to self-learning mechanisms like neuronal networks in order to develop a self-adaptive overload control expert system.

5. Example(s) of the invention.

➢ Intelligent Load Control for the OSP/PCU/ESUN in SURPASS
➢ Intelligent Load Control for Web-Servers
➢ Centralized differentiated QoS aware Call Admission Control for new Soft-switches.

# SIEMENS

# SURPASS

## Global Implementation Specification
## *Functional Specification Level 1*
## P30NNN-ANNNN-ANNN-XX-76J2

## Load Control / Overload Handling in CoPI

**For internal use only!**

**Issued by**
**Information and Communication Networks**
**Hofmannstrasse 51, D-81359 Munich**

**SIEMENS AKTIENGESELLSCHAFT**

Author:              Xavier Priem                              SRIT SE1

In addition to the authors named on the cover page the following persons have collaborated on this document:

Jörg Oehlerich                    ICN WN CC SE 3

The document comprises 74 pages, all pages have issue no XX.
The document is based on template fspecl1.dot.
This issue was last saved on 06.09.2001 13:29.
The document was written with MS WinWord Version 8.0b.
The filename of the main document file was
C:\Users\px007430\archive\work\documents\srit\surpass\overload
control\LMSpecL1_Overload_hiQ_COPL(4).doc.

**EP 1 331 564 A1**

Table of Contents

| 0 | GENERAL INFORMATION | | | | | 6 |
|---|---|---|---|---|---|---|
| 0.1 | History | | | | | 6 |
| 0.2 | References | | | | | 6 |
| 0.3 | Glossary and Abbreviations | | | | | 14 |
| | | 0.3.1 | Glossary | | | 14 |
| | | 0.3.2 | Abbreviations | | | 16 |
| 0.4 | Keyword/ Descriptor | | | | | 21 |
| 0.5 | List of Figures and Tables | | | | | 21 |
| 1 | INTRODUCTION | | | | | 22 |
| 1.1 | Scope | | | | | 23 |
| 1.2 | Overload Handling | | | | | 24 |
| | | 1.2.1 | Terminology | | | 24 |
| | | 1.2.2 | Principles of Overload Handling | | | 24 |
| | | | 1.2.2.1 | Overload Detection | | 24 |
| | | | 1.2.2.2 | Overload Treatment | | 25 |
| 1.3 | System Functions from User Viewpoint | | | | | 25 |
| 1.4 | Assumptions and Dependencies | | | | | 25 |
| 1.5 | Effects on Other Systems and Procedures | | | | | 25 |
| 1.6 | Differences from Requirements | | | | | 25 |

| | | | | | |
|---|---|---|---|---|---|
| **1.7** | **Development Steps** | | | | **25** |
| **1.8** | **Documentation Overview** | | | | **25** |
| **1.9** | **Outstanding Issues** | | | | **25** |
| 2 | REALIZATION | | | | 25 |
| **2.1** | **Overload Detection** | | | | **26** |
| | 2.1.1 | Local CoPI Overload Detection | | | 26 |
| | | 2.1.1.1 | Load Monitoring Process | | 26 |
| | | 2.1.1.2 | Monitored resources | | 27 |
| | | | CPU (NOM/ OOM) | | 27 |
| | | | MEMORY (NOM/ OOM) | | 28 |
| | | | I/O (NOM/OOM) | | 28 |
| | | | OVERALL SYSTEM OVERLOAD (NOM/OOM) | | 29 |
| | | | APPLICATIONS SPECIFIC RESOURCES (OOM only) | | 29 |
| | | | Transient Parameters (NOM/OOM) | | 29 |
| | | 2.1.1.3 | The Normal Operation Mode (NOM) | | 30 |
| | | | 2.1.1.3.1 | Overview of fuzzy logic used in NOM | 30 |
| | | | 2.1.1.3.2 | Fuzzification stage | 31 |
| | | | 2.1.1.3.3 | Inference process | 33 |
| | | | 2.1.1.3.4 | Defuzzification | 34 |

| | | | | 2.1.1.3.5 | CoPl Overload level | | 34 |
|---|---|---|---|---|---|---|---|
| | | 2.1.1.4 | The Overload Operation Mode (OOM) | | | | 34 |
| | | | 2.1.1.4.1 | Overview of fuzzy logic used in OOM | | | 35 |
| | | | 2.1.1.4.2 | CoPl Overload level | | | 36 |
| | | | 2.1.1.4.3 | Application/ process specific overload level | | | 36 |
| | | | | | | | |
| **2.2** | **Overload Treatment** | | | | | | **37** |
| | 2.2.1 | Local CoPl Overload Treatment | | | | | 37 |
| | | 2.2.1.1 | Overload Treatment Process (OTP) | | | | 37 |
| | | | 2.2.1.1.1 | Overload Treatment Reduction Process (OTRP) | | | 38 |
| | | | | 2.2.1.1.1.1 | Overload treatment identification | | 38 |
| | | | | 2.2.1.1.1.2 | Internal Strategies of Load Rejection and Reduction | | 39 |
| | | | | | | | |
| | | | | | | Load Rejection | 39 |
| | | | | | | Load Reduction | 39 |
| | | | 2.2.1.1.2 | Overload Treatment Communication Process (OTCP) | | | 39 |
| | | | | | Communicating Overload Level to CoPl Applications | | 39 |
| | | | | | Communicating Overload Level to Other Platforms | | 40 |
| | | | | | | | |

(continued)

| 2.3 | Overload Management for the OSP | | | | | 40 |
|---|---|---|---|---|---|---|
| | 2.3.1 | Overview | | | | 40 |
| | 2.3.2 | Specificity and Architecture | | | | 40 |
| | 2.3.3 | Interfaces | | | | 40 |
| | 2.3.4 | Platform Overload Treatment | | | | 40 |
| | 2.3.5 | Applications Overload Treatment | | | | 41 |
| | 2.3.6 | Processes Overload Treatment | | | | 41 |
| | | | | | | |
| 2.4 | Overload Management for the PCU | | | | | 41 |
| | 2.4.1 | Overview | | | | 41 |
| | 2.4.2 | Specificity | | | | 41 |
| | 2.4.3 | Interfaces | | | | 41 |
| | 2.4.4 | Platform Overload Treatment | | | | 41 |
| | 2.4.5 | Applications Overload Treatment | | | | 41 |
| | 2.4.6 | Processes Overload Treatment | | | | 42 |
| 3 | INTERFACES | | | | | 42 |
| | | | | | | |
| 3.1 | Overview | | | | | 42 |
| | | | | | | |
| 3.2 | User Interfaces | | | | | 42 |
| | | | | | | |
| 3.3 | Interfaces to other Systems | | | | | 42 |
| | | | | | | |
| 3.4 | External Interfaces | | | | | 42 |
| | | | | | | |

(continued)

| 3.5 | Internal Interfaces | | | | | 42 |
|---|---|---|---|---|---|---|
| | | | | | | |
| 4 | MESSAGE FLOWS | | | | | 42 |
| | | | | | | |
| 5 | TEST STRATEGY | | | | | 42 |
| | | | | | | |
| 6 | EFFECTS ON OTHER SYSTEMS | | | | | 42 |
| | | | | | | |
| 6.1 | \<name of affected system n\> | | | | | 42 |
| | | | | | | |
| 7 | APPENDIX | | | | | 42 |
| | | 7.1.1.1 | CtD Application (LM41899_IUS) | | | 44 |
| | | 7.1.1.2 | Application Distribution Function (ADF) | | | 48 |
| | 7.1.2 | Call Flows of the BO 340 Converged Realtime Services | | | | 48 |
| | | 7.1.2.1 | Connection Agent for VoIP trunking and RAS | | | 61 |

**2 General Information**

*** Replace this line by the text body of the chapter ***

**2.1 History**

Table 1:

| History | | |
|---|---|---|
| Issue | Date | Reason for Changes |
| 01 | 15/01/2001 | AFI |

**2.2 References**

- Documents describing the PCU on the MGI: Note that the features of several versions have to be ported. Please refer also to http://intranet.icn.siemens.de/wn/cs/ecc11/HomeMGI.htm.

| up to V3.2 – to be ported | |
|---|---|
| [BO213a] | P30308-A7850-A213-**-76J2<br>BO213a: EWSD SS7 Gateway |
| [LM41312] | P30309-A0859-A000-**-7659<br>Connection Agent for RAS and VoIP |
| [LM41313] | P30309-A0041-A313-**-7659<br>MGC/SG: MGCP on IP Unit (Protocol Handler) |
| [LM41314] | P30309-Q9200-A314-**-7659<br>CFS:MGI:Integration of H.323 Stack |
| [LM41315] | P30309-Q1315-A000-**-7659<br>MGC/SG: MGI interface control |
| [LM42303] | P30309-A0831-A000-**-7659<br>CFS:MGI:DSS1 stack and API |
| [LM42677] | P30309-A0858-A000-**-7659<br>Security enhancement for OEM H.323 – stack |
| V4 – to be ported | |
| [BO214] | P30309-A0136-A000-**-76J2<br>Fax over IP<br>LM 044356 – hiQ9200: Fax over IP according to T.38 |
| [BO377] | P30309-A1486-A000-**-76J2<br>SURPASS/EWSD: Echo Control (Q.115)<br>LM 043931 – Echo Control Logic for VoIP; LM 044480 – Echo Control Logic for VoIP (Test for Subscriber Part |
| [LM44347] | LM 044347 – hiQ9200: Support of G.723.1 and G.729a |
| [LM44354] | LM 044354 – hiQ9200 CFS: Ringing Tone for H.323-Subscriber |
| V5 (not be be realised on MGI but solely on CoPI) | |
| [BO327] | P30308-A7850-A327-**-76J2<br>Announcements and Dialogs for SURPASS<br>LM 044479 |
| [BO294] | P30308-A0700-A294-**-76J2<br>New traffic measurements for SURPASS<br>LM 043283 |
| [BO335] | P30308-A0700-A335-**-76J2 |

| | SURPASS: IP - Quality of Service (application focus)<br>LM 044088 |
|---|---|
| [BO352] | P30309-A1615-A352-**-76J2<br>Improved Multi ISP features for SURPASS<br>LM 044200 |

• Documents describing the CoPI / UMLA

| [BO262] | P30308-A7850-A262-06-76J2<br>BO262: Commercial Platform For SURPASS |
|---|---|
| [BO356a] | **new for EWSD V16 / hiQ9200 V5**<br>BO 356a: CoPI Carrier Grade Part 1 (HW / SW maintenance)<br>Team leader: Dr. Jürgen Wolter |
| [BO356b] | P30310-A2561-A018-**-76J2<br>BO 356b: OA&M for Carrier Grade CoPI |
| [BO357] | P30309-A1493-A357-**-76J2<br>BO357: High Performance Interface CoPI - SSURPASS Core |
| [BO36 | P30308-A7850-A360-**-76J2<br>BO360 - Evaluation RTP, SUN-Cluster 3.0 / SantaFe |
| [CoPI_DEV] | P30309-A0648-A000-**-7618<br>Commercial Platform Developers Guide |
| [CoPI_REF] | P30309-A0648-A100-**-7618<br>Commercial Platform Users Reference Guide |
| [OpCon] | OpCon User Manual; available at ICN WN CC EB A11 |
| [CM] | P30308-A9791-A003-**-7618<br>CM-Plan for Commercial Platform |
| [BO262] | P30308-A7850-A262-**-76J2<br>Commercial Platform for SURPASS |

• Documents describing VOS / VxWorks / MGI

| [VxWorks] | VxWorks 5.4<br>http://www.windriver.com/products/html/vxwks54.html |
|---|---|
| [VxWorks_ds] | VxWorks 5.4 Datasheet<br>download from http://www.windriver.com/pdf/vxworks-ds.pdf |
| [VxWorks_guide] | VxWorks 5.4 Programmer's Guide<br>download from http://www.windriver.com/pdf/vxworks_guide.pdf |
| [VOS] | P30NNN-ANNNN-ANNN-XX-0018<br>Virtual Operating System (VOS) [available on server mentioned above or in ClearCase for project INTERNODE] |
| [OCANEQ] | P30308-A8067-A014-**-0059 (in German)<br>OCANEQ Stufe 3: DIR. AUFSPR., 64 KANÄLE, BACKUP FUNKT. |
| [Route98] | Route98 user manual<br>Available at PSE EZE CN3 |

• Documents on VoA and US based PCU; please refer also to IMS entry for BO 380: https://ims.icn.siemens.de/livelink/livelink/Open/234837870

| [BO380] | P30309-A1790-A380-**-76J2 <br> BO380: MGC for ATM MG in WM |
|---|---|
| [CFS_R18] | P30310-A2561-A018-**-76J2 <br> Call Feature Server (hiQ9200) for Voice over ATM (VoA) U. S. Release 18.0 |
| [CFS_R01] | P30310-A2561-Q000-**-76J2 <br> Voice over Packet (VoP) Virtual Trunking (hiQ9100) |
| [PCU_VOA] | P30310-A2561-A018-**-7659 <br> PCU Voice over ATM Application (Release 1.0) |

1 • Various Documents

| [BO213b] | P30309-A1632-B213-**-76J2 <br> MGC MGC Communication |
|---|---|
| [Msg_Cat] | P30310-A2796-Q001-**-7622 <br> Message Catalogue: hiQ Platform Interfaces |
| [BO385] | P30309-A1561-A385-**-76J2 <br> Reuse of SURPASS IVR for EWSD |

2 • Standards

| [EN 300 403-1] | ETSI EN 300 403-1 V1.3.2 (1998-04) <br> European Standard (Telecommunications series) <br> Integrated Services Digital Network (ISDN); <br> Digital Subscriber Signalling System No. one (DSS1) protocol; Signalling network layer for circuit-mode basic call control; <br> Part 1: Protocol specification <br> [ITU-T Recommendation Q.931 (1993), modified] |
|---|---|
| [EN 300 196-1] | European Telecommunications Standards Institute <br> EN 300 196-1 V1.2.2 (1998-04) <br> European Standard (Telecommunications series) <br> Integrated Services Digital Network (ISDN); <br> Generic functional protocol for the support of supplementary services; Digital Subscriber Signalling System No. one (DSS1) protocol; <br> Part 1: Protocol specification |
| [Q.931] | ITU-T Recommendation Q.931 (05/98) <br> Digital subscriber Signalling System No. 1 <br> ISDN user-network interface layer 3 specification for basic call control |
| [Q.932] | ITU-T Recommendation Q.932 (05/98) <br> Digital subscriber Signalling System No. 1 <br> Generic procedures for the control of ISDN supplementary services |
| [H.225] | ITU-T Recommendation H.225.0 (02/98) <br> Call signalling protocols and media stream packetization for packet-based multimedia communication systems |
| [H.235] | ITU-T Recommendation H.235 (02/98) <br> Security and encryption for H-Series (H.323 and other H.245-based) multimedia terminals |

(continued)

| | | |
|---|---|---|
| [H.245] | ITU-T Recommendation H.245 (09/98)<br>Control protocol for multimedia communication | |
| [H.323] | ITU-T Recommendation H.323 (02/98)<br>Packet-based multimedia communications systems | |
| [MGCP] | IETF RFC 2705<br>Media Gateway Control Protocol | |

*Standardisation*

| ETSITIPH | ETSI TIPHON project TS-101313<br>*Tiphon network architectures and reference configurations*<br>*Phase 2: Scenario 1 + Scenario 2* | (01/99) |
|---|---|---|
| Färber2 | Proc. SPIE Photonics East Conf. "Performance and Control of Network Systems III",<br>Boston, MA, USA, J. Färber, S. Bodamer, J.Charzinski,<br>*Statistical evaluation and modelling of Internet dial-up traffic* | (1999) |

| IETFMEG | Draft IETF working group MEGACO<br>Media Gateway Control<br>draft-ietf-megaco-protocol-01.txt |
|---|---|
| IETFSIG | Draft IETF working group SIGTRAN<br>Signaling Transport |

| ITUTH225 | ITU-T Recommendation<br>*H.225 - Call signalling protocols and media stream packetization for packet based multimedia communication systems* | (02/98) |
|---|---|---|
| ITUTH245 | ITU-T Recommendation<br>*H.245 - Control protocol for multimedia communication* | (02/98) |
| ITUTH248 | ITU-T Recommendation<br>*Draft H.248 - Gateway Control Protocol* | (08/99) |
| ITUTH323 | ITU-T Recommendation<br>*H.323 - Packet-based multimedia communications systems* | (02/98) |
| ITUTH341 | ITU-T Recommendation<br>*Draft H.341 -Multimedia Management Information Base* | (05/99) |
| ITUTQ543 | ITU-T Recommendation<br>*Q.543 - Digital Exchange Performance Objectives* | |

| Paxon1 | IEEE/ACM Transactions on Networking<br>*Vem Paxon and Sally Floyd, Wide Area Traffic: The Failure of Poisson Modeling* | (06/95) |
|---|---|---|

| SIEM01 | Commercial Platform for SURPASS<br>Business Opportunity Specification "BO262"<br>Document: P30308-A7850-A262-06-76J2 | |
|---|---|---|
| SIEM02 | Concept Paper:<br>*Improved EWSD Access to Voice over Internet* | |

(continued)

| | | |
|---|---|---|
| SIEM03 | Document: P30308-A8261-A000-**-76J2<br>F-Spec-L2:<br>*Internode Step 2: SW for integrated NB:PoP* | V14A |
| SIEM04 | Document: P30308-A0027-A122-**-7659<br>F-Spec-L2<br>*EWSD Internode SLMI:PHA*<br>*Packet Hub: Hardware and Basic Firmware* | |
| SIEM05 | Document: P30308-A9054-A000-**-7659<br>Functional Specification Level 2<br>*EWSD Internode step 1: ISS with 'Any POP'*<br>P30308-A0041-A342-**-7659 | |
| SIEM06 | Functional Specification Level 2 (LM27100)<br>*EWSD Internode Step 2*<br>*SLMI:MPB*<br>*Modem Pool Card*<br>*HW and FW*<br>P30308-A0027-A100-**-7659 | |
| SIEM07 | Functional Specification Level 2<br>*EWSD Internode Step 2.2*<br>*ENM V4*<br>P30309-A0125-A000-**-7659 | |
| SIEM08 | Functional Specification Level 2 (LM27106)<br>*EWSD Internode Step 2 SW Prerequisites*<br>P30308-A3333-V013-**-7659 | V13A |
| SIEM09 | Functional Specification Level 2 (LM27106)<br>*EWSD Internode Step 2 SW Prerequisites, Part 2*<br>P30308-A3332-V013-**-7659 | V13A |
| SIEM10 | Functional Specification Level 2<br>LM 27108<br>SW for high Bitrate PoP<br>P30308-A0027-A108-**-7659 | V14A |
| SIEM11 | Functional Specification Level 2<br>*EWSD Intemode*<br>*SLMI:PHA*<br>*Packet Hub PHUB*<br>*Remote Access Server (RAS) FW*<br>P30308-A9055-A000-**-7659 | |
| SIEM12 | BOS Concept Paper<br>Internet Supplementary Services<br>P30308-A8262-A000-**-76J2 | |
| SIEM13 | Functional Specification Level 2<br>LM 28102<br>Improved Access to VoIP (IAVoIP)<br>P30308-A0028-A102-**-7659 | V13A |
| SIEM14 | Functional Specification Level 2<br>LM 28185<br>Internet Subscriber Controlled Input<br>P30308-A0028-A185-**-7659 | V14A |
| SIEM15 | Functional Specification Level 2<br>MWI<br>Message Waiting Indication according ETSI | V13A |

(continued)

| | P30308-A8560-A-**-7659 | |
|---|---|---|
| SIEM16 | Functional Specification Level 2 | V14A |
| | LM 40166 | |
| | Click to Dial | |
| | P30308-A0040-A166-**-7659 | |
| SIEM17 | Handbook Load Control Mechanisms | |
| | P30308-A8387-A000-01-7618 | |

| | | |
|---|---|---|
| Willi1 | Department of Computer Science, University of Saskatchewan | (03/96) |
| | *Carey L. Williamson et al, Web Server Workload Characterization: The Search for Invariants* | |
| Willi2 | University of Saskatchewan | (04/97) |
| | *Carey Williamson et al, Statistical Multiplexing of Self-Similar Traffic: Theoretical and Simulation Results* | |

| | |
|---|---|
| /I12/ | Message Catalog |
| | P30310-A2568-QA001-**-7622 |
| | HiQ LAN Interface |
| | HiQ / CoPI Interface |
| /I13/ | Design Specification |
| | P30310-A2668-A018-**-76D8 |
| | Subsystem JCILD |
| | CoPI Interface Load Distributor |
| /I14/ | Design Specification |
| | Safeguarding MB, Subsystem JSGMB |
| | Process SWAB0 |
| | As of EWSD V13 |
| | P30303-D0863-A604-**-76D8 |
| /I15/ | Design Specification |
| | Safeguarding MB, Subsystem JSGMB |
| | Component: Configuration MB |
| | V13T |
| | P30303-D0977-T013-**-76D8 |
| /I16/ | Design Specification |
| | Safeguarding Software in the CP |
| | Subsystems JSGMB and JSGMC |
| | Component: Routine Test for Peripheral Units |
| | EWSD V15 and higher |
| | P30303-D0982-V015-**-76D8 |
| /I17/ | Design Specification |
| | Subsystem BC |
| | P30308-A0545-A018-**-76D8 |
| | EWSD Release 18.0 |

(continued)

| | |
|---|---|
| /I18/ | Design Specification<br>Subsystem CO<br>P30308-A2671 -A105-**-76D8<br>EWSD Release 17.0 |
| /I19/ | Design Specification<br>Subsystem JAEXD<br>P30310-A2365-A017-**-76D8<br>EWSD Release 17.0 |
| /I20/ | Design Specification<br>Subsystem OA<br>P30310-A2669-A019-**-76D8<br>EWSD Release 19.0 |
| /I21/ | Design Specification<br>Subsystem JSGLT<br>P30303-D0980-R017-**-76D8<br>EWSD Release 17.0 |
| /I22/ | Design Specification<br>EWSD Safeguarding Software in the CP, Peripheral Safeguarding<br>Fault Analysis, Subsystem JSGMC<br>P30303-D0864-T013-**-76D8 |
| /I23/ | Safeguarding Software in the CP<br>Safeguarding Software of the Call-Processing Periphery<br>Subsystems JSGMB and JSGMC<br>P30303-D0982-V015-**-76D8 |
| /I24/ | CS7U: Adaptation of US Release 18 Software<br>Functional Specification Level 2<br>P30308-A7820-Q619-**-7659 |
| /I25/ | Voice over Packet (VoP)<br>Virtual Trunking (hiQ9100)<br>Functional Specification Level 1<br>P30310-A2561-Q000-**-76J2 |
| /I1/ | Requirement Specification<br>P30310-A2534-A000-**-7626<br>Media Gateway ATM/TDM |
| /I2/ | Functional Specification (Level 1)<br>P30310-A2561-A018-**-76J2<br>Call Feature Server for Voice over ATM (VoA) |
| /I3/ | Interface Specification<br>P30310-A2621-A000-**-7618<br>Media Gateway Controller / Media Gateway<br>VoA Interface Specification |

(continued)

| /I4/ | Message Catalog<br>P30310-A2568-A018-**-7622<br>EWSD / PCU Interface |
| /I5/ | Functional Specification (Level 2)<br>P30310-A2644-A018-**-7659<br>VoATM LTG, LTU, Trunk Administration |
| /I6/ | Functional Specification (Level 2)<br>P30310-AXXXX-A018-**-7659<br>SURPASS Maintenance |
| /I7/ | Functional Specification (Level 2)<br>P30310-A3100-A018-**-7659<br>CoPI Interconnection Maintenance |
| /I8/ | Functional Specification (Level 2)<br>P30310-AXXXX-A018-**-7659<br>VOATM PCU |
| /I9/ | Functional Specification (Level 2)<br>P30310-A2643-A018-**-7659<br>Media Control User and Call Control Interface |

## 2.3 Glossary and Abbreviations

### 2.3.1 Glossary

| Overload Handling | means the sum of all measures for monitoring the load situation of a given system, detecting different overload levels and bringing overload treatment in action. |
| Overload Detection | means the detection of a given level of overload in contrast to normal Operation State. |
| Overload Treatment | means the sum of measures to get in action when a given overload level has been detected in order to reduce the system load and therefore the overload level with the final aim to bring the system back to normal operation. |
| Fuzzy Logic | A type of logic that recognizes more than simple true and false values. With fuzzy logic, propositions can be represented with degrees of truthfulness and falsehood. |
| | Fuzzy logic is a superset of conventional (Boolean) logic that has been extended to handle the concept of partial truth - truth values between "completely true" and "completely false". It is a multi-valued logic that allows intermediate values to be defined between conventional evaluations like 'tall/short', 'hot/cold' etc. Fuzzy logic allows notions like 'rather warm' or 'pretty cold' to be formulated mathematically and processed by computers. |

(continued)

| | |
|---|---|
| | For example, the statement, today is sunny, might be 100% true if there are no clouds, 80% true if there are a few clouds, 50% true if it's hazy and 0% true if it rains all day.<br>Fuzzy logic has proved to be particularly useful in expert system and other artificial intelligence applications.<br>Fuzzy control replaces the role of mathematical model with a fuzzy model that uses expert knowledge to describe a system. |
| Fuzzy Expert System | A fuzzy expert system is an expert system that uses fuzzy logic instead of Boolean logic. In other words, a fuzzy expert system is a collection of membership functions and rules that are used to reason about data. Unlike conventional expert systems, which are mainly symbolic reasoning engines, fuzzy expert systems are oriented toward numerical processing. |
| Fuzzy Set/Variable | In classical set theory, an element u is a member of a set if it has a membership value of 1 or is not a member if it's membership value is 0, i.e. u is either a member of the set or not. In fuzzy set theory, the degree of belonging of the element u to a fuzzy set is a real number between 0 (zero) and 1 (one). The value zero is used to represent complete non-membership, the value one is used to represent complete membership, and values in between are used to represent intermediate degrees of membership. In set theory, a fuzzy variable is the fuzzy representation of a crisp variable using a fuzzy set. |
| Load A | normal traffic rate, which correlates to the engineered rules |
| Load B | maximum traffic, which can be served without overload treatment |
| Message Class | Generic classification of the messages monitored for the overload handling. The classification is done by the application calling the LOH. Using the Message classes instead of the Message type themselves allows a generic implementation of the LOH. |
| Overload Class | Classification of the required overload levels (or Load Level - LL) that have to be considered for the Overload handling. |
| UMLA | The Unified Mediation Layer, UMLA, is an entity that defines a set of interfaces available to the application programs. This interfaces are supplied by the commercial products (OS, DB, FS, etc.) and can be also extended by proprietary additions (e.g. communication interfaces to EWSD platforms).<br>The purpose and most important task of UMLA is to ensure the openness of the OSUN. |
| Open | The CoPI is open in several respects:<br>It employs commercial HW and SW technology to provide the platform.<br>The UMLA ensures that it is possible the make use of advances in HW (performance, new I/O) and SW (new OS features, stack, encryption) technology without jeopardizing already developed application SW. Even a switch from one vendor to another must be possible.<br>The UMLA must ensure that the CoPI provides an industry standard runtime environment. This means, it must be possible to incorporate SW from ISVs.<br>The CoPI will become the platform to open SURPASS and EWSD towards third party SW development. It is not the runtime environment for this SW, it rather provides access to the offered interfaces. |

(continued)

| | |
|---|---|
| Operator | Mathematical fuzzy operator like AND, OR, MAXMAX, COG |
| Node | A node is a complete computing unit consisting of a computer HW, usually an n-way SMP, OS, I/O-interfaces, disk. Actually, a node is a server. |
| Cluster | A Cluster is a collection of nodes, which are connected with each other. A specific SW unit, called cluster SW, is responsible for logically connecting the nodes and providing certain services to the application SW in order to utilize the cluster. The cluster SW also provides the cluster management functions. |
| Cluster Interconnect | The cluster interconnect represent the physical interconnections of the nodes of a cluster. This is its only purpose, no other I/O runs through this network, except for messages exchanged between the nodes. |
| External Storage | Part of the OSUN, used as mass data and file storage device. It is not the boot device of the OSUN, but stores data relevant for bringing up the application, e.g. data services, file services. |
| Public LAN | With public LAN we mean the interface of the OSUN to the IP-network. The Public LAN is in the domain of the OSUN, which is connected to a WAN by means of routers. The WAN is in the telecom or ISP provider's premises. |
| Server | HW and SW providing a service, which is accessible for clients through a data network |
| Converged Service: | Converged services are provided by Siemens AG on the OSUN. Converged services provide intemetworking support functions between the PSTN/ISDN and the IP network to Telcos. Converged services are building blocks for Telcos to offer converged multimedia applications to their end-customers. |
| Converged Multimedia Application: | Converged multimedia applications are offered by Telcos to their end-customers. They are realized on top of the converged services provided on the OSUN and additional front-end (e.g. WEB pages) and backend services (e.g. databases). Converged multimedia applications are using simultaneously the PSTN/ISDN and the IP-network. In this document converged multimedia applications are shortly called also "converged application". |
| Online Patching | Incorporation of corrections into the software on a running system, without taking any software or hardware components of the system temporarily out of service, and with negligible degradation of service. This could e.g. be accomplished on a Solaris system by replacing dynamic executables or shared objects on disk, and then having the runtime linker relink them at the next call |
| screen level integration: | Integration of various manufacturer specific applications on one screen. The presentation of each application is done in an own window. The syntax and semantic of the manufacturer specific application remains unchanged. Examples for screen level integration are:<br>Telnet session for remote terminal connection (should only be fallback solution)<br>X-terminal emulation for remote presentation of a windowed GUI<br>Http interface using an Internet browser<br>NT client containing a management application via CITRIX meta-frame |

(continued)

| Basic OAM task: | Sequence of SNMP requests, which are performed one after another. The sequence appears to the operator as a single task on command level. |
|---|---|

**2.3.2 Abbreviations**

**a**

| AAL | ATM Adaptation Layer |
|---|---|
| ADF | |
| ALI | |
| AN | Access Network |
| AP | |
| API | Application Programmers Interface |
| ATM | Asynchronous Transfer Mode |

**b**

| BAP | Base Processor |
|---|---|
| BC | Bearer Capability |
| BCCH | Broadcast Control Channel |
| BCD | Binary Coded Decimal |
| BCF | Bearer Control Function |
| BCS | Block Check Sequence |
| BCT | Basic Craft Terminal |
| BICC | Bearer Independent Call Control |
| B-ISUP | Broadband ISDN User Part |
| BO | Business Opportunity |
| BS | Billing System |
| BSD | Basic System Definition |
| BW | Band Width |

**c**

| CAD | Callprocessing Administration |
|---|---|
| CAM | Call Processing Maintenance |
| CAP | Call Processor |
| CBR | Constant Bit Rate |
| CC | Call Control |
| CCF | Call Control Function |
| CCITT | (former name of ITU-T) |
| CCNC | Com. Channel signaling Network Control (EWSD) |
| CCU | Channel Codec Unit |
| CDR | Charging Data Record |
| CGP | Charging Gateway Protocol |
| CIC | Circuit Identification Code |
| CID | (unique) Charging ID |
| CID | Channel Identifier |
| CIH | CID Handler |
| CIP | Congestion Indication Primitive |
| CITRIX | |
| CM | Connection Management |
| CN | Core Network |
| CO | Connection Oriented |
| CODEC | Coder/Decoder |
| COH | Connection Handler |
| CONNTRAC | Connection Tracer |
| CoPI | |
| CP | Co-ordination Processor |
| CPL_OVL | |

| | | |
|---|---|---|
| CP113 | Central Processor |
| CPCI | Compact Peripheral Component Interconnect |
| CPM | Communication Processor Module |
| CPU | |
| CRISP | |
| CS | Circuit Switch |
| CS | Coding Scheme |
| CSE | CAMEL Service Environment |
| CSS | |
| CT | Craft Terminal |
| CTD | |
| CWI | |
| **d** | |
| DB | database |
| DBMS | database management system |
| DBLU | DBMS less unit |
| DCS1800 | Digital Cellular System |
| DL | DownLink |
| DLU | Digital Line Unit |
| DPC | destination point code |
| DSN | Domain Name Server |
| DSS | Digital Subscriber Signaling |
| DTAP | Direct Transfer Application Part |
| DTE | Data Terminal Equipment |
| **E** | |
| EC | Emergency Call |
| EDGE | Enhanced Data Rates for GSM Evolution |
| EFR | Enhanced Full Rate |
| EIA | electrical engineers association |
| EIR | Equipment Identification Register |
| EMC | Emergency Call |
| Erl | Erlang |
| ESU | |
| ESUN | External Service Unit |
| ETH | Ethernet |
| ETSI | European Telecommunications Standards Institute |
| EWI | |
| EWSD | Elektronisches Wählsystem Digital |
| EWSX | Elektronisches Wählsystem Extended |
| **f** | |
| FEC | Forward Error Correction |
| FL | Fuzzy Logic |
| FR | Frame Relay |
| FS | File Server |
| FTP | File Transfer Protocol |
| FT1 | Feature Test 1 |
| FT2 | Feature Test 2 |
| **g** | |
| GCP | General Indication Primitive |
| GGSN | Gateway GPRS Support Node (36140) |
| GMM | GPRS Mobility Management |
| GMM | GPRS Mobility Management |
| GMM_AF | GMM Application Function |
| GMM_TF | GMM Transport Function |
| GMSC | Gateway Mobile Station Controller |
| GPRS | General Packet Radio Service (21,4 kbit/s) |
| GR | GPRS Register |
| GSM | Global System for Mobile Communication (9,6 kbit/s) |

| | |
|---|---|
| GSM-R | Railway (Eisenbahn) |
| GSN | GPRS Support Node |
| GTP | GPRS Tunneling Protocol |
| GTT | Global Title Translation |
| GUI | Graphical User Interface |
| **h** | |
| HEC | Header Error Control |
| HLR | Home Location Register |
| HO | Handover |
| HSCSD | High Speed Circuit Switched Data (14,4 kbit/s) |
| HTML | Hyper Text Marking Language |
| HTTP | Hyper Text Transfer Protocol |
| HW | Hardware |
| **i** | |
| ICM | Internet Call Manager |
| ID | Identifier |
| IDS | Interactive Debugging System |
| I/F | |
| iHLR | Innovation HLR |
| IMEI | International Mobile Equipment Identity |
| IMSI | International Mobile Subscriber Identity |
| IMT | International Mobile Telecommunication |
| IN | Intelligent Network |
| INAP | intelligent network application part / intelligent network application protocol |
| I/O | |
| IOP | Input/Output Processor |
| IOS | |
| IP | Internet Protocol |
| IPC | |
| IS-41 | EIA network protocol standard] |
| ISDN | Integrated Service Digital Network |
| ISM | |
| ISP | Internet Service Provider |
| ISS | |
| ISUP | ISDN User Part |
| ISV | |
| IT | |
| ITU-T | International Telecommunication Union- Telecomm. |
| lu-LIC | lu Interface LIC |
| IWF | Interworking Function |
| IWU | Interworking Union |
| **j** | |
| Java | |
| JDK | Java Development Kit |
| JVM | Java Virtual Machine |
| **k** | |
| K1297 | Conformance Tester K1297 |
| **l** | |
| L1 | Level 1 |
| LAI | Location Area Identity |
| LAN | Local Area Network |
| LAPD | Link Access Protocol for D-channel |
| LC | Load Control |
| LIC | Line Interface Circuits |
| Lj | Length of Event Queue Level j |
| LL | Load Level |
| LLC | Logical Link Control |
| LM | Leistungsmerkmal |

| | | |
|---|---|---|
| LM | Load Manager |
| LMT | Local Maintenance Terminal |
| LMP | Load Monitoring Process |
| LOH | local overload handler |
| LS | Load State |
| LTG | Line Trunk Group |
| LUP | Location Update |
| **m** | |
| MAC | Medium Access Control |
| MAP | Management Application Part |
| MAP | Mobile Application Part |
| MB | Message Buffer |
| MCP | Main Control Processor |
| MDD | Magnetic Disc Device |
| MDS1 | Message Distributor Stage 1 |
| MG | Media Gateway |
| MM | Mobility Management |
| MML | Manager Machine Language |
| MO | Mobile Originated |
| MOC | Mobile Originated Call |
| MOD | Magneto-Optical Disc device |
| MP | Main Processor |
| MP:AAL2 | MP AAL2 |
| MP:ACC | MP for Accounting |
| MP:GTT | MP Global Title Translation |
| MP:LC | MP Load Control |
| MP:LM | MP Load Manager |
| MP:LS | MP Load State |
| MP:MM | MP for Mobility Management |
| MP:PD/SH | MP for Packet Dispatching and Session Handling |
| MP:RANAP | MP Radio Access Network Application Part |
| MP:SLT | MP Signaling Line Termination |
| MPU | Main Processor Unit |
| MPU-D | Main Processing Unit D (CS2.0) E in CS2.1 |
| MS | Mobile Station |
| MSC | mobile [services] switching center |
| MSC | Mobile Station Controller |
| MSP | MP-SP protocol |
| MT | Mobile Terminated |
| MTC | Mobile Terminating Call |
| MTP | Message Transfer Part |
| **N** | |
| NAS | Non Access Stratum |
| NNI | Network Node Interface |
| NOM | Normal Operation Mode |
| NS | Network Service |
| NSE | Network Service Entity |
| NSS | Network Switching Subsystem |
| NSVC | Network Service Virtual Connection |
| NT | Network Termination |
| NUC | Nailed Up Connection |
| **o** | |
| OAM | Operation, Administration and Maintenance |
| OC | Object Class |
| OEM | |
| OLH | Overload Handler |
| OMC | Operation and Maintenance Center |
| OMH | Overload Message Handler |

OOM          Overload Operation Mode
OPC          originating point code
OS           Operating System
OSI          Open System Interconnection
OSP
OSUN
OTP          Overload Treatment Process
OTCP
OTRP
OVL          Overload
OVL_CPU
OVL_MEM
OVL_IOS
OVL_Lx       Overload Level x

**p** PCM          Pulse Code Modulation
PCP          Peripheral Control Platform
PCS1900      Public Cellular System
PCU          Packet Control Unit
PD           Packet Dispatcher
PDCH         Packet Data Channel
PDH          Plesiochronous Digital Hierarchy
PDN          Packet Data Network
PDP          Packet Data Protocol
PDT          Packet Data Terminal
PDTCH        Packet Data Traffic Channel
PDU          Packet Data Unit
PIF          Published Interface
PINT+
PLMN         Public Lands Mobile Network
PM           Performance Management
PNNI         Private NNI
PO           Packet Oriented
pps          packets per second
PRM          Packet Routing Manager
PS           Packet Switch
PSA          Power Supply unit type A
PSTN         Public Switching Telecommunication Network
PT-A         PT-Adapter
PTM          Point-To-Multipoint
PTP          Point-To-Point
PVC          Permanent Virtual Channel

**q** QoS          Quality of Service
QUICC        Quad Integrated Communication Controller

**r** RANAP        Radio Access Network Application Part
RHS          Resource Handler Subsystem
RLC          Radio Link Control
RLP          Radio Link Protocol
RM           Resource Management
RNC          Radio Network Controller
RNS          Radio Network Subsystem
RR           Radio Resource
RRM          Radio Resource Management
RTM          Routing Manager
RX           Receive

**s**

| | |
|---|---|
| SA | Stand Alone |
| SAG | Signaling Agent |
| SC | Switch Commander |
| SCB | Control Shelf Basic |
| SCCP | Signaling Connection Control Part |
| SCE | Control Shelf Extended |
| SCMG | SCCP Management |
| SCP | Service Control Point |
| SDH | Synchronous Digital Hierarchy |
| SGSN | Serving GPRS Support Node (39190+36140) |
| SH | Session Handling |
| SIM | Subscriber Identification Module |
| SIMVT | Simulation Testframe f. call processing (Vermittlungstechnik) |
| SIP | General Information |
| SLR | SGSN Location Register |
| SLT | Signaling Line Termination |
| SLT | Signaling Link Terminal |
| SM | Service Management |
| SMP | |
| SMS | Short Message Service |
| SMSC | Short Message Service Center |
| SN | Switching Network |
| SNDCP | Sub Network Dependent Control Protocol |
| SNMP | Simple Network Management Protocol |
| SP | Server Processor |
| SPC | signaling point code |
| SPU | Service providing unit |
| SP:BSSGP | Server Processor for BSSGP |
| SP:GTP | Server Processor for GTP |
| SP:ISP | Server Processor for ISP |
| SP8 | Synchronisation Point 8 (Online) |
| SR | Service Release |
| SRM | Signaling Resource Management |
| SS | Subsystem |
| SS7 | Signaling System No. 7 |
| SSNC | Signaling System Network Control (39190) |
| SSS | Switching Subsystem |
| STC | Signaling Transport Converter |
| STM | Synchronous Transfer Mode |
| SUN | Service Unit |
| SVC | Service Call |
| SVC | Switched Virtual Connection |
| SW | Software |
| SWT | Software Tracer |
| t | |
| TA | Timing Advance |
| TC | Transcoder |
| TCAP | Transaction Capabilities Application Part |
| TCP | Transmission Control Protocol |
| TDM | Time Division Multiplexing |
| TELCO | Telecommunication Company |
| TFC | Transmission Flow Control |
| TFI | Temporary Flow Identifier |
| TLLI | Temporary Logical Link Identifier |
| TRAU | Transcoding and Rate Adaption Unit |
| TS | Timeslot |
| TS | Transport Signaling |
| TSC | TRAU Server Card |

| | |
|---|---|
| TTM | Talk To Me |
| TX | Transmit |
| **u** | |
| **UBI** | **unique buffer identification** |
| UCR | UMTS Switching Subsystem Release |
| UDP | User Datagram Protocol |
| UE | User Equipment |
| UL | UpLink |
| UMLA | Unified Mediation Layer |
| UMSC | UMTS MSC |
| UMTS | Universal Mobile Telecommunication System |
| URI | Uniform Resource Indicator |
| URL | Uniform Resource Locator |
| USF | Uplink State Flag |
| UTRAN | UMTS Terrestrial Radio Access Network |
| **v** | |
| VC | Virtual Connection |
| VCPU | Virtual Central Processing Unit |
| VCPU-OL | VCPU Overload Level |
| VLR | Visitor Location Register |
| VMSC | Visited Mobile Station Controller |
| **w** | |
| WAN | Wide Area Network |
| WEB | |
| WN | Wireline Networks |
| **x** | |
| **y** | |
| YATP | Yet Another Tunneling Protocol |

**z**

**2.4 Keyword/Descriptor** SURPASS, CoPI, ISS, Overload Handling

2.5 List of Figures and Tables

| Figure 1: | The Unified Mediation Layer (UMLA) | 24 |
|---|---|---|
| Figure 2: | Operation modes of the LMP (NOM/OOM) | 27 |
| Figure 3 | CoPI: CPU load level and its fuzzy equivalent level (only provided as example, values to be discussed | 28 |
| Figure 4 | CoPI: Memory charge level and its fuzzy equivalent level (only provided as example, values to | |
| | be discussed) | 28 |
| Figure 5 | CoPI: I/Os usage level and its fuzzy equivalent level (only provided as example, values to be discussed) | 29 |
| Figure 6: | Fuzzy Logic applied to NOM | 30 |
| Figure 7: | a typical (and very true) rule example | 31 |
| Figure 8: | NOM fuzzy inference engine | 31 |
| Figure 9: | definition of the CPU fuzzy variable using fuzzy sets | 32 |
| Figure 10: | NOM fuzzy variables | 32 |
| Figure 11: | output of all the rules within the fuzzy model | 33 |
| Figure 12: | accumulation of the output variable, building the output result variable | 34 |
| Figure 13: | Fuzzy Logic applied to OOM | 35 |
| Figure 14: | OOM fuzzy inference engine | 36 |
| Figure 15: | output of all the rules within the fuzzy model | 36 |

**EP 1 331 564 A1**

(continued)

| Figure 16: | the Overload Treatment Process in the CoP1 | 38 |
|---|---|---|
| Figure 42: | ISS Function split on OSP | 43 |
| Figure 7-43 : | Application software components on OSP | 44 |
| Figure 44 | Overview over affected interfaces | 45 |
| Figure 45 : | Call Processing for CtD call (Basic Call) | 46 |
| Figure 46: | Call Processing for TTM call (Basic Call) | 48 |
| Figure 21: | TTM Call establishment | 49 |
| Figure 22: | TTM Call release (Unregister???) | 49 |
| Figure 23: | ICM registration and authorization | 50 |
| Figure 24: | ICM outgoing call establishment | 50 |
| Figure 25: | ICM Call release for outgoing call | 51 |
| Figure 26: | ICM Incoming call | 51 |
| Figure 27: | Initiation of an automatic conference | 52 |
| Figure 28: | A conferee starts monitoring | 52 |
| Figure 29: | Add a conferee | 53 |
| Figure 30: | A conferee hooks on | 54 |
| Figure 31: | CtC private Chat | 54 |
| Figure 32: | CtC Create and join a synchronized surfing session | 55 |
| Figure 33: | URL modification for SyS | 56 |
| Figure 34: | End a conference when the CC hooks on | 56 |
| Figure 35: | Establishment of a Freecall with SyS (part 1) | 57 |
| Figure 36: | Establishment of a Freecall with SyS (part 2) | 57 |
| Figure 37: | SyS session with Freecall (part 1) | 58 |
| Figure 38: | SyS session within Freecall (part 2) | 59 |
| Figure 39: | End of Freecall session | 59 |
| Figure 40: | Prepaid Card Service call establishment (Internet initiated) | 60 |
| Figure 41: | Prepaid Card Service call termination (for Internet initiated Prepaid call) | 60 |
| Figure 2-17: | PCU software structure overview | 61 |
| Figure 2-18: | Basic VoIP virtual trunking scenario | 62 |
| Figure 2-19: | Basic VoIP RAS scenario | 63 |
| Figure 2-20 : | Logical position of CA for VoIP in system | 64 |
| Table 1: | History | 6 |

**3 Introduction**

Within the Siemens SURPASS product family, the value-added IP services become more and more important and show new needs in terms of performance and reliability. This is the reason why the running environment of these services has to be realized for carrier-grade scaling and availability. Like in the EWSD, solid overload detection and handling mechanisms are the precondition for an optimized use of the resources and a higher robustness of the system.

It has been chosen to develop and implement these services on the so-called Commercial Platform (CoPI) which relies on a SUN Netra running SUN's Solaris operating system.

The CoPI runs inside the SURPASS architecture and is thus connected to the "EWSD part" of the hiQ9200. The EWSD subsystem has its own overload detection and handling system (based on the STATOR algorithm and LTG local overload control). This quite complex proprietary system defines six levels of overload, defense mechanisms and inter-process/processors overload messaging. For this reason, the present overload handling mechanisms should take advantage of this already available work and stay compatible with it. From a SW point of view, the CoPI becomes a platform within an EWSD SURPASS switch. The SW, which comprises the new services, is spread across all platforms, including CoPI. SW running on the CoPI must invoke any SW interfaces on CP or LTG and vice versa. To provide this capability, a physical and a logical connection must be established between CoPI and EWSD-HW interfacing the CP-SW and LTG-SW.

The system described in this document takes into account the fact that the CoPI deals with other kinds of applications than the EWSD does. These applications form two groups: a first group that defines the Open Service Platform (OSP) and a second group that defines the Packet Control Unit (PCU). All these applications deal with IP-networks and IP-services on one side and with classical telephony on the other side. They need other measurements and handling mechanisms than the ones used in the EWSD processes.

A typical Internet Services server does not provide any support to limit the rate of connections per second and/or the rate of requests per second to dynamically adapt to server load and/or satisfy a policy constraint on service guarantees. As a result, it is likely for an Internet Services server to become saturated (overloaded) when servicing content to clients. In an overloaded condition, a typical server suffers severe performance degradation, with the overall throughput falling significantly and client connectivity and perceived performance (such as the delay in completing the request) becoming unpredictable. In addition to susceptibility to overload, current servers lack the ability to monitor the incoming load and differentiate between different types of services, especially in scenarios such as virtual hosting in which multiple services (e.g., different Internet service applications) may be co-located on the same server platform. Without overload protection and service differentiation, a typical server would only be able to provide "best effort" service to its customers.

Here we develop control mechanisms and policies such that the CoPI (i) tracks and avoids non-manageable overload situations before they set in (predictive fuzzy logic rules), (ii) avoids also short higher load picks (transient fuzzy logic rules), and (iii) provides service differentiation between different applications based on specified policies (application specific fuzzy logic rules). With such a support a server becomes self-sufficient in preventing overload and can dynamically configure the control mechanisms provided to obtain the desired performance effects. One of the advantages of this approach is that no additional or new equipment needs to be deployed separately to provide similar capabilities. Further, this permits existing server installations to be upgraded in an application and network transparent manner, i.e., without deeply modifying applications or existing network connectivity. Another significant advantage is that the control settings provided can be used to track an overload situation as it unfolds, generating notifications or control actions as necessary. This greatly simplifies administration and capacity planning for a server, and by extension for a server farm, thereby reducing system management costs and complexity.

The provided fuzzy logic programming language authorizes all levels needed for a'fine tuning of the overload handling. There is no limit for the granularity of the overload decision and overload treatment models.

Furthermore, the idea to use the results of the rules calculation in combination with the output variables calculation allows a simple description of overload actions to be specially taken. Because a rule describes a precise mix of overload conditions like common resources overflow, application specific queues overflow, this same rule can be taken as decision base for overload handling actions. Every new recognized overload situation can be introduced in the fuzzy logic expert system database and actions can be taken according to it.

The proposed fuzzy logic toolbox allows giving different priorities to the rules used for the overload status calculation. This permits different levels of precision in the overload calculation. More important rules get a higher priority factor.

### 3.1 Scope

The scope of this document is the specification of the requirements for a solid load monitoring of global resources on the CoPI and local performance of given applications running on it. Then an overload level calculation has to be defined. This document will also propose mechanisms for overload handling, matching the different applications concerned by the overload.

Solid load monitoring of resources and mechanisms for overload handling are a precondition to increase the robustness and the performances of the system. The term resources as used in this document subsumes any kind of system resources, i.e. CPU time, memory, processes, buffers, semaphores.

As long as the underlying OS supports the control of some of these resources, a simple resource management can be based on those UNIX features. However, for a more sophisticated managed allocation and use of resources must be controllable by the UMLA. This involves creating a closure on system calls like malloc, fork, kill, and other resource expending or releasing OS calls. Resource management realized this way will be the base for treatment of software errors, implementation of fail-over strategies, resource trace tools, and overload control.

Resource Management must be completely hidden from the application. There is no API for it. However, resource management influences the development of application indirectly reflected in the corresponding user guidelines. Even applications not designed for the UMLA (commercial products) are controlled by it, thus protecting the system from those applications. Note that this does not mean that commercial products cannot be disastrous for the system, but it reduces the risks.

Overload handling is needed in order to provide:

- a stable system behavior,
- guaranteed throughput / performance, within overload conditions.

Throughout the system overload handling mechanisms are divided into overload detection and overload treatment which are implemented on various units / platforms according to the same basic principles defined in [SIEM01].
The quantitative definition of the requirements above, i.e. guaranteed throughput and overload level, has to follow some predefined values according to some preconditions:

The specifications concerning PSTN-switching might be used [ITUTQ543]. They require that the effective load should not fall below 90% of Load B even if the offered incoming load increases to 150% or 200% of Load B. Load B is defined here as a load level 20% above the planable load (Load A). Under Load B, the system has to provide full service, however under limited requirements concerning processing delay.

For telecommunication switching systems, overload is defined among the following load levels:

Load A: normal load conditions with respect to network dimensioning.
Load B: high load level, no overload measures have to be taken under these conditions.
Overload: traffic is above maximum node performance, traffic rejection should be performed.

**3.2 Overload Handling**

**3.2.1 Terminology**

The commercial platform (CoPl) encompasses the Open Service Platform (OSP), the Packet Control Unit (PCU) and External Server Unit (ESU). Open Service Platform and Packet Control Unit are interconnected to the EWSD Core Switching System via non-open interfaces. The EWSD Core Switching System may either be the EWSD classic line or EWSD innovation line.
The External Server Unit hosts standalone applications that do not necessarily need to communicate with EWSD (e.g. the RADIUS service). ESU and EWSD Core Switch are not directly interconnected. The Packet Control Unit runs those parts of the call control for packet networks which is required in addition to the re-used EWSD call control (e.g. H.323 protocol family, MGCP protocol).
The Open Service Platform runs converged services, i.e. services combining features of the PSTN/ISDN with features realized using IP technology.

*Figure 18: The Unified Mediation Layer (UMLA)*

The commercial platform is made up of the commercial hardware, the commercial operating system, the commercial cluster software and of additional platform functions and programming guidelines, called Unified Mediation Layer (UMLA). UMLA is not an OEM product but is provided by ICN WN CS.
The programming guidelines of UMLA describe how applications must make use of the commercial platform functions, so that a non-interfering operation is made possible and portability to other OS and HW is not precluded. UMLA will not exclude the integration of commercial software.
In addition to the programming guidelines UMLA provides APIs and functions for alarming, for communication with the EWSD core and a set of basic functions like timer management, tracing, SW error reporting, IPC management and intranode context saving. Later on, when requirements with respect to service availability increase, UMLA may offer additional functions for inter-node context saving and inter-node communication, etc.

### 3.2.2 Principles of Overload Handling

As a central point, the overload handling is divided into overload detection and overload treatment.

- **Overload detection:** This part defines the methods of measurement of load situation and the categorization of overload levels.

- **Overload treatment:** This part defines the measures, which are started after detection of a certain level of overload in order to return to normal operation.

3.2.2.1 Overload Detection

For the overload detection at one platform the following general principles should be used:

- A simple quantitative criterion shall be defined which indicates the load situation of the platform.

- For this criterion, one or more values shall be defined for the definition of overload states.

- In normal state, the platform shall work in the same manner, as without any implementation of this LM, the additional load for overload detection should be less than 2%.

- A hysteresis shall be included between switching on/off for all overload levels to prevent frequently overload switch on/off, which causes additional messages and therefore performance loss.

- Overload detection mechanism has already been introduced on CP, LTG, and MP.

3.2.2.2 Overload Treatment

For the overload treatment within one platform the following general principles should be used:

- For each overload level a specific overload treatment should be defined which reduces the work which has to be done by the critical component (processor, memory, queue length...) and therefore the probability of an ongoing increase of system load significantly.

- Services already provided by the core network and negotiated with the CoPI should not be discarded if the system is in overload.

- Requests for new services can be rejected depending on the overload level.

- Overload treatment measures will be provided, which will be included later on in an overall overload concept.

### 3.3 System Functions from User Viewpoint

Overload handling must be completely hidden from the user. Overload Control has the task to determine load states, deliver this information to applications, and perhaps distribute the load onto the different processors. => It must be transparent for the user.

### 3.4 Assumptions and Dependencies

These are the same as for the referenced BOs [2.2].

### 3.5 Effects on Other Systems and Procedures

The Overload Handling System of the CoPI has to fit into and possibly communicate with the Overload System of the EWSD and/or the components of the SURPASS product family.

### 3.6 Differences from Requirements

Due to the high adaptation potential of the described concept, application specific resources will be monitored and used for the second part of the Load Monitoring Process.

### 3.7 Development Steps

*** Replace this line by the text body of the chapter ***

### 3.8 Documentation Overview

*** Replace this line by the text body of the chapter ***

### 3.9 Outstanding Issues

*** Replace this line by the text body of the chapter ***

### 4 Realization

IMPORTANT NOTE:

In the following description, all functional blocks of the load control concept can be either understood as separate processes or as procedures of a unique load control application (this for performance reasons).

### 4.1 Overload Detection

Overload detection encompasses a set of phases like local and remote resources load monitoring, calculation of an overall overload level, system status switching and start of the overload treatment.
Behind these functions, the overload detection system has to report its current status to the concerned entities (NetM, CP, and LTG). (Please see Communicating Overload Level to Other Platforms, page 18.)

### 4.1.1 Local CoPl Overload Detection

The CoPl fuzzy logic overload calculation leads to continuous values between 0 and 1. If needed for compatibility with the previous load control SW, it is possible to re-scale to a discrete range from 0 to 6.
In contrast to the concept of CP overload control no explicit load states need to be defined for the CoPl, i.e. the CoPl is considered not to be under overload if the "over-" load level is between 0 and a given threshold. Furthermore, the fuzzy logic delivers a continuous overload level, that is much more precise than a classical if then else / switch architecture can produce.

#### 4.1.1.1 Load Monitoring Process

The CoPl's operating system (UNIX, SUN Solaris) consists in applications and processes that are called by the kernel (endless loop) depending on their priority. In this environment, the LMP (Load Monitoring Process) should run as a single process (mono-thread). It should be quick and time interrupt driven. It should get a higher priority but not use more than a predefined amount of memory and CPU time when called (budget defined in Erl equivalent to a sustained load of 2% of the CPU resource during its run).
The LMP has to monitor different kinds of resources:

- CPU usage
- Memory usage
- I/O usage
- External System Overload (CP_OVL...)
- Applications specific resources

The LMP must have two running modes:

- a basic one in non-overloaded operation in order to detect an overload situation by checking a restricted amount of main resources like CPU, memory and ios,
- an overload mode running under overload situation, which makes a more detailed analysis of the overload situation and that checks an higher amount of resources (not only CPU, memory and ios, but also application specific ones).

Under normal situation, the LMP just checks the operating status of the CoPI and, in case of detection of a possible overload situation, switches to its overloaded mode.

In overloaded mode, the LMP checks extra resources in order to possibly detect the overload responsible application.

Figure 19: Operation modes of the LMP (NOM/OOM)

The left part of the Overload Operation Mode (OOM) is very similar to the Normal Operation Mode (NOM); the main difference is the control loop frequency. If the chosen programming technique allow it, the two processes could be merged into one (with two threads).

The NOM must be a light process, checking a restricted fix amount of main resources. It is not correlated to the running applications on the CoPI. It says if the CoPI (globally) should enter the OOM. This part of the LPM is the same for all versions of the CoPI, like for example the PCU or the OSP. It can rely on an optimized Fuzzy Logic Kernel running in C or Assembler (for higher speed), a prototype is available from the SRIT. Its configuration can be adapted through its FL-Model configuration file (like a script or database). An other aspect is that the NOM conserves some values between its runs and uses them to eliminate some kinds of problems like short-time overloads that do not require an overload treatment. Typically the NOM calculates the "climbing factor" or increase/decrease coefficient (df/dt).

The OOM is should stay a "light" process (not more than 50% more resource consumption than the NOM), checking a higher amount of resources (the sames as NOM and additional application specific resources if planned). It relies on a FL driven expert system that can compute which measures have to be taken in order to drive the CoPI back to the NOM. Its configuration can be adapted through its FL-Model configuration file (like a script or database). A kind of overload responsibility check is performed by the OOM. According to the results, some overload notification signals are sent and overload handling actions are taken to the diverse components of the CoPI. It decides how the Overload Treatment has to work. The OOM FL-Model depends on the applications/modules running on the CoPI.

4.1.1.2 Monitored resources

**CPU (NOM/OOM)**

The global CPU load can be checked using standard OS functions or UMLA API. The returned value is a percentage of the whole CPU capacity (in a further step, it could be a per-CPU measurement in case of multiple CPUs). Before using this raw measurement, it can be useful to go through an intermediate state, making the CPU raw measurement correspond to a CPU overload level (OVL_CPU). This intermediate statement is mostly useful if the NOM does not rely on Fuzzy Logic, indeed the FL performs automatically such conversions.

**CPU**

| Usage | OVL_CPU |
|-------|---------|
| 0% | 0% |
| 10% | 0% |
| 20% | 3% |
| 30% | 5% |
| 40% | 10% |
| 50% | 15% |
| 60% | 20% |
| 70% | 30% |
| 80% | 45% |
| 90% | 65% |
| 100% | 100% |

*Figure 20 CoPI: CPU load level and its fuzzy equivalent level*
*(only provided as example, values to be discussed)*

**MEMORY (NOM/OOM)**

The global MEMORY load can be checked using standard OS functions or UMLA API. The returned value is a percentage of the whole MEMORY capacity (in a further step, it could be a per-CPU measurement in case of multiple CPU or...). Before using this raw measurement, it can be useful to go through an intermediate state, making the MEMORY raw measurement correspond to a MEMORY overload level (OVL_ MEM). This intermediate statement is mostly useful if the NOM does not rely on Fuzzy Logic, indeed the FL performs automatically such conversions.

**MEMORY**

| Usage | OVL_MEM |
|-------|---------|
| 0% | 0% |
| 10% | 3% |
| 20% | 5% |
| 30% | 10% |
| 40% | 25% |
| 50% | 50% |
| 60% | 75% |
| 70% | 90% |
| 80% | 95% |
| 90% | 100% |
| 100% | 100% |

*Figure 21 CoPI: Memory charge level and its fuzzy equivalent level*
*(only provided as example, values to be discussed)*

**I/O (NOM/OOM)**

The global I/O load can be checked using standard OS functions or UMLA API. The returned value is a percentage of the whole I/O capacity. Before using this raw measurement, it can be useful to go through an intermediate state, making the I/O raw measurement correspond to a I/O overload level (OVL_IOS). This intermediate statement is mostly useful if the NOM does not rely on Fuzzy Logic, indeed the FL performs automatically such conversions.

**I/Os**

| Usage | OVL_IOS |
|-------|---------|
| 0% | 0% |
| 10% | 3% |
| 20% | 5% |
| 30% | 10% |
| 40% | 15% |
| 50% | 20% |
| 60% | 30% |
| 70% | 40% |
| 80% | 55% |
| 90% | 75% |
| 100% | 100% |

*Figure 22 CoPI: I/Os usage level and its fuzzy equivalent level
(only provided as example, values to be discussed)*

**OVERALL SYSTEM OVERLOAD (NOM/OOM)**

Being interconnected to other SURPASS components that interact with it, the CoPI has to get information about the whole system health and communicate its own status to the rest of the system, if it enters an overload status. This depends on the scenario (OSP or PCU) and also the use of load-balancing mechanisms.

For the LMP, it is important to stay informed about the overload situation of its connected neighbors inside the considered SURPASS configuration. Overload Status Messages are supposed to be sent from the overloaded components to the CoPI (belonging in the same way to the overall overload control system).

A kind of priority has to be defined within the LMP in order to react as a slave inside the overall overload handling of SURPASS. If the central call control enters the overload status 6, then it sends a message to the possibly responsible units in order to tell them to reduce the admission of new calls inside the system. This should also work specially in the case where the CoPI hosts the PCU. The PCU can be at the origin of new call attempts. The PCU has to react on some congestion signals coming from the central call control system (EWSD CP). The CoPI is notified via overload messages from the CP.

**APPLICATIONS SPECIFIC RESOURCES (OOM only)**

Once the OOM is reached, it is compulsory to detect which part(s) of the whole system is (are) responsible for the overload situation. To reach this, one needs some applications specific resources monitoring. Most of the applications use the same kind of resources. We regroup these ones into five main types (similar to the ones in the LTG load control and related to the application configuration file within the UMLA):

- communication blocks,
- timer blocks,
- heap blocks (UMLA: queues),
- memory blocks (UMLA : pools),
- transaction control blocks.

These resources can be controlled either by the UMLA and/or the OS. The LMP will then access the resources through one of them. The LMP may consider the overall consumption of these resources and determine the percentile use for each application. These common resources are essential for the well functioning of the CoPI and the extent of their pools is designed to be sufficient. But their availability under heavy load must be monitored. This supervision is not meant to be a means for nicely tuned load regulation measures but it is an "emergency break". If needed, they will be used for the determination of the application(s) responsible for the overload situation.

**Transient Parameters (NOM/OOM)**

These parameters are useful in order to avoid a too rapid reaction against local overload situations that are not significant and therefore must not start overload treatment procedures. It is still under analysis which form these parameters will take.

The simplest form is the tracing of the time interval since possible overload status entry. The next step is to tune this interval so that the system stays stable and reacts only on higher overload duration.

4.1.1.3 The Normal Operation Mode (NOM)

The NOM is in charge of controlling the (over-) load level during normal operation. According to the new calculated level, it eventually switches to the Overload Operation Mode (OOM). In order to make this level calculation, the NOM needs the in 1.1.1.2 described inputs (only the system relative ones). Using the fuzzy logic descriptive model, it is easy to mix these inputs together and get the overload level using a set of basic rules.

*Figure 23: Fuzzy Logic applied to NOM*

**4.1.1.3.1 Overview of fuzzy logic used in NOM**

In NOM, every CHK_TIME sec, the predefined resources are checked (through CoPI OS/UMLA) and are stored for following treatment. The next step consists in fuzzifying these crisp values into fuzzy variables. The sequence of fuzzy logic (inference) processing can be broadly divided into two functions: inference and defuzzification. The inference process begins with the processing of the production rules. Individual rules consist of a condition block (also called the antecedent or "IF" block) and a conclusion block (known as the consequent or "THEN" block). The inference process proceeds from the conditions to the conclusion, and then to the logical sum. To get a usable output, however, a deffuzifier operation must be performed to convert the fuzzy values back to a fixed, discrete output value, here the overload level for instance.

```
IF      CPU_LOAD_VERY_HIGH    AND MEMORY_LOAD_VERY_HIGH
                              AND  IOS_LOAD_VERY_HIGH
```

```
THEN  OVERLOAD_LEVEL_VERY_HIGH
WITH  HIGHEST PROBABILITY
```

*Figure 24: a typical (and very true) rule example*

All traditional logic operators (and, or, not...) are available and also new ones that work only for fuzzy logic. Collecting such rules is easier than deducing complicated mathematical formulas that have to be re-engineered with the introduction of new variables in the system. The rules can be deduced from measurements and observations, using a quite straightforward intuitive deduction. For example, experience (thumb rules) in system tuning can be directly reused.

A first proposal for the NOM fuzzy model is done here according to the requirements emitted by ICN WN CC SE 3. These requirements impose to the NOM to stay platform specific and not application specific. That means that only a part of the monitored resources will not be taken into account in the NOM fuzzy model. These remaining resources are to be used in the OOM anyway. The fuzzy kernel uses a fuzzy model definition file "overload_detection_model.fuz".

*Figure 25: NOM fuzzy inference engine*

*Figure 25: fuzzy variable CPU (sets)*

### 4.1.1.3.2 Fuzzification stage

A crisp input is a parameter coming from the monitoring system (CPU, memory, ios, CP-OVL), it is a number comprised in a predefined interval, for example for the CPU usage input parameter, the CPU crisp input is defined as a real number between 0 and 1 (or 0% and 100%). For this crisp input, a fuzzy variable has to be defined using "sets" of the fuzzy language:

We define here eleven intensity levels of CPU usage (0... 10), ranking from 0 to 1 for the crisp input parameter. For example, the definition of level 3 of CPU usage is defined through a trapeze starting by 20% climbing to the maximum of validity from 27.5%, staying at maximum till 32.5% and decreasing to zero by 40%.

E.g. for an input CPU usage value of 25%, we say that the CPU usage fuzzy set 3 (level 3) is true with 65% validity. It is also the case for level 2, that means that, when CPU usage is equal to 25%, CPU is at the same time in level 2 and level 3 with 65% validity for each. The graphical representation of the CPU fuzzy variable corresponds to a part of the fuzzy model file:

```
[SETS]

CPU_0      { XSTART=0 XSTOP=1 XLEN=101 FUNCT=TRAPEZE(0.000,0.000,0.025,0.100,0) }

CPU_1      { XSTART=0 XSTOP=1 XLEN=101 FUNCT=TRAPEZE(0.000,0.075,0.125,0.200,0) }

CPU_2      { XSTART=0 XSTOP=1 XLEN=101 FUNCT=TRAPEZE(0.100,0.175,0.225,0.300,0) }

CPU_3      { XSTART=0 XSTOP=1 XLEN=101 FUNCT=TRAPEZE(0.200,0.275,0.325,0.400,0) }

CPU_4      { XSTART=0 XSTOP=1 XLEN=101 FUNCT=TRAPEZE(0.300,0.375,0.425,0.500,0) }

CPU_5      { XSTART=0 XSTOP=1 XLEN=101 FUNCT=TRAPEZE(0.400,0.475,0.525,0.600,0) }

CPU_6      { XSTART=0 XSTOP=1 XLEN=101 FUNCT=TRAPEZE(0.500,0.575,0.625,0.700,0) }

CPU_7      { XSTART=0 XSTOP=1 XLEN=101 FUNCT=TRAPEZE(0.600,0.675,0.725,0.800,0) }

CPU_8      { XSTART=0 XSTOP=1 XLEN=101 FUNCT=TRAPEZE(0.700,0.775,0.825,0.900,0)
    }

CPU_9      { XSTART=0 XSTOP=1 XLEN=101 FUNCT=TRAPEZE(0.800,0.875,0.925,1.000,0) }

CPU_10     { XSTART=0 XSTOP=1 XLEN=101 FUNCT=TRAPEZE(0.900,0.975,1.000,1.000,0) }

[VARIABLES]

1 CPU  {0,1,2,3,4,5,6,7,8,9,10} IN
```

*Figure 26: definition of the CPU fuzzy variable using fuzzy sets*

Extracting the validity of each fuzzy set for each variable according to its crisp value is called "Fuzzification" of the input crisps.

Figure 27: NOM fuzzy variables

Once all input crisps have been fuzzified, the inference process is entered.

### 4.1.1.3.3 Inference process

The inference process reads the fuzzy rule base and evaluates its contained rules according to the fuzzy sets coming from the fuzzification stage. These rules look quite similar to standard logic rules. Like we described them in Figure 8, the fuzzy rules are build following the well-known IF THEN construction. Where the difference between standard (Boolean) logic and fuzzy logic takes place, it is in the values taken by the operands and the mathematical definition of the operators. Where "true" (1) and "false" (0) are the only possible values for operands in standard logic, the fuzzy logic allows operands to take continuous or discrete values between 0 and 1 (in its normalized form). Some logical operators are defined in the standard logic and also in the fuzzy logic:

| NOT | ! | ¬ | ⁻ |
|-----|---|---|---|
| AND | & | ∧ | · |
| OR | \| | ∨ | + |
| XOR | | | ⊕ |

A characteristic of the fuzzy logic operators is the possibility to optimize their mathematical definition according to the context:

A AND B = MIN(A,B) but also A AND B = ALGP(A,B) (algebraic product)

A OR B = MAX(A,B) but also A OR B = ALGS(A,B) (algebraic sum)

57

NOTA =1-A

According to these definitions, it is understandable how fuzzy logic allows logic with values between 0 and 1 (and not only 0 or 1). Again the very true rule (Figure 8):

Lets say that if CPU_LOAD_VERY_HIGH = 0.7 (after fuzzification), MEMORY_LOAD_VERY_HIGH = 0.5, IOS_LOAD_VERY_HIGH = 0.9,
then the assessment

**IF** *CPU_LOAD_VERY_HIGH* **AND** *MEMORY_LOAD_VERY_HIGH* **AND** *IOS_LOAD_VERY_HIGH* **THEN** *OVERLOAD_LEVEL_VERY_HIGH* **WITH** *HIGHEST PROBABILITY*
becomes, if we take MIN as AND operator definition,

OVERLOAD_LEVEL_VERY_HIGH is true with 50% (=min(0.7,min(0.5,0.9)) x 1.0)

*Figure 28: output of all the rules within the fuzzy model*

When all rules have been calculated, the resulting sets of the output variable have to be "accumulated". This is done by composing all the sets together using an "accumulation" operator, like the logical sum (max operator).

*ure 29: accumulation of the output variable,
building the output result variable*

The result of this operation can be seen in the lower part of the Figure 13. One can see that the different rules (here only given as example in Figure 12) that generate the output result.

### 4.1.1.3.4 Defuzzification

The last step performed by the fuzzy logic kernel within the NOM is the deffuzification. As we have seen in the previous step, the fuzzy logic delivers an output result in form of a graph (Figure 13). This result is not usable in this form, it needs to converted into a crisp value to be exploitable in the rest of the NOM.

Again, it is possible to use diverse methods or operators to get a crisp value out of the resulting curve. Possible operators are the COG (center of gravity), the MAXMAX (maximum of maximums). Here we propose to use the COG. This operator permits taking into account all the results of all the rules, where the MAXMAX is a pessimistic operator. The COG operator search the center of gravity of the surface between zero (y axe) and the resulting curve from the inference step. In our example, the COG is 0.4 (i.e. an overload value of 40% from maximum overload level). With MAXMAX we would have got 0.65 (this does not take into account the result of some rules, giving also a result around 0.2 and 0.4).

In a first step, the COG defuzzification method will be taken. If tests show that the model reacts too optimistically to overload situations, then further investigations have to be done in order to determine the best-suited operator for the deffuzification.

### 4.1.1.3.5 CoPI Overload level

The value delivered by the fuzzy logic model of the NOM ranks from 0 to 1; so that if we want to stay compatible with the CP/LTG-Overload levels, we must re-scale from [0:1] to [0;1;2;3;4;5;6].

### 4.1.1.4 The Overload Operation Mode (OOM)

If the NOM detects an overload level superior to a given threshold, it switches to the Overload Operation Mode (OOM) in order to determine the reactions needed to return to a non overloaded situation. Within the OOM, measurements are made (resource checking) and combined to determine which process or application has to slow down, to be alarmed or to be aware of the overload situation. Instead of giving out a global overload level for the CoPI as the NOM does, the OOM calculates several overload levels according to the desired precision of overload handling reactions.

That means that it is possible to group processes and applications together and calculate an overload level for this precise group. It is also possible to calculate for each relevant process or application. And finally it also is possible to calculate only one overload level for all processes and applications together. In fact it depends on the case OSP, PCU or an other server configuration for the CoPI. A detailed analysis is provided for the OSP [4.3] and for the PCU [4.4]. Accordingly to these analysis proposals, configuration scripts are proposed.

Realization

*Figure 30: Fuzzy Logic applied to OOM*

### 4.1.1.4.1 Overview of fuzzy logic used in OOM

The fuzzy logic kernel is the same for the OOM as for the NOM. Differences can be found by the input variables, the output variables and the special use of the output of the inference stage of the kernel.

Once the OOM state has been entered, a check is performed every OVL_CHK_TIME. This time interval will be set in a first step to the same value as the CHK_TIME (NOM) according to the previous experience made by the overload mechanisms for CP / LTG / MP.

The same fuzzy core functions and interfaces are used. The fuzzy kernel takes a fuzzy model definition file "overload_treatment_model.fuz":

- the input variables encompass the ones of the NOM and some application specific resources,

- the output variables define again the overload level for the whole CoPI but also application specific overload levels (degree of action to be taken for this particular application),

- the CoPI overload level is calculated again at that step.

The aim of the fuzzy logic in the OOM is to determine a level of overload or responsibility for overload per application/process and also the CoPI overload level again. The application/process overload levels will be further used by the Overload Treatment Process (OTP).

We can see in the following figure the fuzzy inference engine used for the OOM:

*Figure 31: OOM fuzzy inference engine*

After the Inference Process step, it is possible to extract rules validity as shown in Figure 16.

These values (or a part of them) will be transmitted to the OTP for further treatment. It is not the usual step that is used for a fuzzy logic expert system. But during the study it appeared to be a good solution to help the OTP program to take some decisions. This rules validity is kept in order to be mixed with the results coming from the defuzzification step.

Figure 32: output of all the rules within the fuzzy model

After the Interference Process step, it is possible to extract rules validity as shown in Fiure 16.

These values (or a part of them) will be transmitted to the OTP for further treatment. It is not the usual step that is used for a fuzzy logic expert system. But during the study it appeared to be a good solution to help the OTP program to take some decisions. This rules validity is kept in order to be mixed with the results coming from the defuzzification step.

Since it is possible to associate a rule to a set of known overload conditions (with known overload handling actions), getting the validity values of the rules permits a precise overload handling decision, i.e. in the way an expert system acts.

### 4.1.1.4.2 CoPI Overload level

Same as 1.1.1.3.5 ...

Open issue: shall we use the results of the application specific overload calculation by calculating the CoPI overload level at that step or shall we re-use the NOM fuzzy model to control again the resources. Further investigations must be made.

Arguments:

- one model with two separate rule-sets : only one script download and one instance of the fuzzy calculator,

- two models with each one rule-set: simpler administration but more resource consumption.

**4.1.1.4.3 Application/process specific overload level**

Each application/process that runs on the CoPI needs three blocks to be integrated into the Overload Management System:

- dedicated routines to check its specific resources status,

- an associated fuzzy logic variable (definition of sets),

- a set of rules leading from these resources to a specific overload level.

Depending on the chosen programming technique, these blocks can be integrated either offline or online (database). This issue is open and is not in the scope of this document. Another classification could be also done for the global role of the CoPI: PCU, OSP, and ESUN... Configuration files can be done for each of these solution packages.

**4.2 Overload Treatment**

After the Overload Detection, Overload Treatment has to be started in order to come back to a non-overloaded situation. The Overload Detection and its associated components deliver a CoPI Overload Level, application/process specific Overload Levels and overload rules validity values to the Overload Treatment (OT) program.
According to these inputs, the OT has to decide actions to be taken in order to bring the system back to its normal status. To do this, the OT has to start actions locally (within the CoPI) and/or remotely by sending overload messages to the connected equipment.
All actions taken locally belong to the Local CoPI Overload Treatment (1.2.1). The other actions depend on the communication of the CoPI Overload Level to the other platforms (Please see Communicating Overload Level to Other Platforms).

**4.2.1 Local CoPI Overload Treatment**

The Local CoPI Overload Treatment is in charge of taking actions to reduce overload locally on the CoPI itself and communicating its overload status to other connected platforms to first avoid new incoming traffic and second inform the system.

4.2.1.1 Overload Treatment Process (OTP)

The Overload Treatment Process and its subsystems drive all these features. Four types of mechanisms participate to the OTP:

5. Decision of the actions to be taken,

6. Active or direct local overload reduction,

7. Passive or indirect local overload reduction,

8. Passive or indirect remote overload reduction.

Mechanism 1 and 2 take place in the Overload Treatment Reduction Process. Mechanisms 3 and 4 take place in the Overload Treatment Communication Process (external and internal stages).

*Figure 33: the Overload Treatment Process in the CoPI*

#### 4.2.1.1.1 Overload Treatment Reduction Process (OTRP)

4.2.1.1.1.1 Overload treatment identification

This process first decides which actions (and action types) have to be taken according to the diverse overload levels and rules validity it becomes from the Load Monitoring Process (LMP). With actions we mean here active or passive, local or remote, increasing or decreasing.

- Active action: action that acts directly through the OS or the UMLA on applications,

- Passive action: action that acts indirectly through a common interface (thresholds in a self-controlled -standalone-application), sending overload levels to the applications/processes,

- Local action: action acts local on the CoPI,

- Remote action: action sends messages through interfaces to external platforms/processes,

- Increasing action: action increases load rejection,

- Decreasing action: action restricts decreases load rejection.

Then the OTRP starts the needed overload treatment mechanisms. The OTRP treats itself the local active actions and delegates all the other actions to the Overload Treatment Communication Process (OTCP).
The reason of this separation between OTRP and OTCP is that local active actions distinguish themselves from other ones by their mechanisms; they do not communicate with the concerned application/process but act directly on it through the OS or the UMLA (for example by reducing the allowed amount of CPU time or memory or blocking their communication with the network communication stacks).
In opposition to the OTRP, the OTCP communicates either locally with CoPI hosted applications/processes using messages and/or threshold variables or remotely with other platforms and applications using the messaging system.

4.2.1.1.1.2 Internal Strategies of Load Rejection and Reduction

The fuzzy logic expert system of the OTP enables classes of services/processes to be defined. This means that different priorities can be given to the applications/processes running for the CoPI.

*Load Rejection*

Internal strategies start with load rejection actions. This is done by disabling the upcoming service requests. These strategies are identified in the next parts of this document (application by application), as in chapters 4.3 and 4.4.
If the load rejection action takes place in the CoPI without alerting the application with messages, it belongs to the OTRP, if messages are sent, it belongs to the OTCP.
Load rejection is the main strategy for overload handling. Once the system has reached the critical level of load, new upcoming requests should be rejected in order to assure the system to recover from the overload situation.
Most applications have an integrated call admission control that accepts or rejects incoming requests regarding internal thresholds of overload. These thresholds are usually fixed before the start of the application. In the present solution, the OTP decides a proportional overload level. This should replace any predefined fixed threshold. It allows to stay efficient even if the hardware configuration changes.
These overload levels must be communicated to the applications by the OTP, using either the OTRP or the OTCP. This way of working is similar to the one of the Load Control within the CP/LTG software.
Please see chapters 4.2.1.1.1, 4.2.1.1.2, 4.3 and 4.4.

*Load Reduction*

At this time is load reduction not planned. If needed in new versions of the load control system, the current proposal can be used in extension to the Load Rejection strategies.
Internal strategies of load reduction are in that case strategies of attribution (or distribution) of resources to spplications/processes according to their overload status and their pre-defined priorities.
CPU, MEMORY and IOS are shared by these applications/processes. It is possible to change the repartition or attributed amounts of these resources for each application through either the OS or the UMLA. If the action takes place without alerting the application with messages, it belongs to the OTRP; if messages are sent, it belongs to the OTCP.
If a given application/process has reached a critical overload level and other applications have been given amounts of resources they do not use at that precise time, then a good strategy is to give these resources to the overloaded application/process so that it can accomplish its task and return to a normal load situation. As soon as this is done, the re-routed resources can be given back to their owners.
That means that in overload status, a dynamic resource sharing could be achieved, and that the repartition would be done by the fuzzy logic expert system.

**4.2.1.1.2 Overload Treatment Communication Process (OTCP)**

This process is in charge of relaying the overload treatment actions (decided in the OTRP) to local or remote applications/processes/equipment using system messages. These messages can be sent using the UMLA and/or other communication protocols, depending on the destination.
The applications/processes addressed by the OTCP can be of two types, local or remote. Local means here that they run directly on the CoPI itself and remote means that they run on some separate equipment and can be commanded through some management protocols/interfaces.

Communicating Overload Level to CoPI Applications

There is an active way of informing applications about changes of the overload level by event and a procedural interface that makes the overload levels available.
The exact mechanism (message type, interface and procedure) is defined for each application or process. The diversity of applications, processes and their manufacturer does not allow a common treatment. That is the reason why the overload treatment has to be federated into a single control system that decides and then distributes overload rejection/reduction actions.
Possible means to achieve the communication of the overload levels and actions to the applications and processes are:

- messaging interface,
- UMLA API,
- Open Third Party APIs,
- Network Management Protocols (SNMP...).

All these options will be discussed in dedicated paragraphs for the OSP and the PCU.

Communicating Overload Level to Other Platforms

For several load control related purposes load levels need to be distributed by CoPl load control to others but the own platform.
Possible means to achieve the communication of the overload levels and actions to the applications and processes are:

- messaging interface (LTG, EWSD (CP), Proxies),
- Network Management Protocols (SNMP...).

All these options will be discussed in dedicated paragraphs for the OSP and the PCU.

## 4.3 Overload Management for the OSP

### 4.3.1 Overview

The new hiQ 4000 Open Service Platform (OSP) adjunct to the SURPASS hiQ9100/9200 or the EWSD, making use of their call control capabilities, provides old and new ISS services like CWI, EWI and Click-To-Phone. The Commercial Platform of the OSP and the applications running on have been described in the BOs 262, 233 and 340.
In order to achieve a carrier grade level, load control and overload handling mechanisms have to be implemented within the OSP. Because of the quick evolution of such services and possible changes in the architecture, overload-handling mechanisms have to remain flexible and adaptable for new requirements.
Therefore the proposed concept is particularly well adapted to the OSP. Each time a new module or a new application is inserted into the existing OSP architecture, only little changes in the system configuration file and the overload communication module are needed.

### 4.3.2 Specificity and Architecture

The OSP hosts or will host most of the Internet Supplementary Services (ISS) like CWI, EWI or the Click-To applications. Some of these applications were hosted until now on separate servers and will be ported to the OSP (BO262/233/340).
Following ISS services are described in the BO340:

- Internet Call Manager
- Click-to-Conference
- Prepaid Service
- Synchronized Surfing
- Push and Poll Services

### 4.3.3 Interfaces

The ISS applications running on the OSP need diverse interfaces to external equipment like: CP (EWSD) / hiQ10/20/30 / Databases / Clusters T1120.
The interfaces will be described for each application.

### 4.3.4 Platform Overload Treatment

Platform Overload Treatment is the overload treatment needed for the platform when no particular application is responsible for the overload situation. This can be conditioned by external applications or platforms, like for example overload status received by the OSP from the EWSD/hiQ9200. It can also happen for a global overload situation where system software or modules (OS) are responsible.

If the overload comes from a received overload status from higher priority systems like the EWSD/hiQ9200 (CP overload for instance), then the OSP has to enter an higher overload level et reduce its load to this machine.

### 4.3.5 Applications Overload Treatment

Each time possible, the applications should have a kind of integrated Call Admission Control that checks the last known overload status.

This overload status can be different for each application, forcing it to react differently against the load situation. This allows a higher flexibility for the overload treatment mechanisms.

Depending on the inter-process communication capabilities of the considered application, its dedicated overload status will be delivered to it (OTP/OTRP or OTCP) or will be available for polling from the OTP (OTCP).

According to its overload level, the application can drive different strategies, like delaying or refusing new incoming requests.

The new incoming requests should be stopped, when possible, not in the application itself, but in the processes that are at the beginning of the call/request processing. But, if these processes are used from other applications that are not in an overload situation requiring some overload treatment, then the new incoming requests have to be stopped at the next level, after leaving these processes and before arriving at the considered application. This is done by configuring the fuzzy expert system with the correct set of rules.

To be provided...

### 4.3.6 Processes Overload Treatment

To be provided...

### 4.4 Overload Management for the PCU

### 4.4.1 Overview

Re-use BO262/BO213/BO380/LM VOIP Connection Agent for Virtual Trunking and RAS.

BO380/LM

### 4.4.2 Specificity

VoIP Call Control / Protocol Translation Gateway / MGCP / H.323 / FT1800

### 4.4.3 Interfaces

### 4.4.4 Platform Overload Treatment

Platform Overload Treatment is the overload treatment needed for the platform when no particular application is responsible for the overload situation. This can be conditioned by external applications or platforms, like for example overload status received by the PCU from the EWSD/hiQ9200. It can also happen for a global overload situation where system software or modules (OS) are responsible.

If the overload comes from a received overload status from higher priority systems like the EWSD/hiQ9200 (CP overload for instance), then the PCU has to enter an higher overload level et reduce its load to this machine.

### 4.4.5 Applications Overload Treatment

Each time possible, the applications should have a kind of integrated Call Admission Control that checks the last known overload status.

This overload status can be different for each application, forcing it to react differently against the load situation. This allows a higher flexibility for the overload treatment mechanisms.

Depending on the inter-process communication capabilities of the considered application, its dedicated overload status will be delivered to it (OTP/(OTRP or OTCP)) or will be available for polling from the OTP (OTCP).

According to its overload level, the application can drive different strategies, like delaying or refusing new incoming requests.

The new incoming requests should be stopped, when possible, not in the application itself, but in the processes that are at the beginning of the call/request processing. But, if these processes are used from other applications that are not in an overload situation requiring some overload treatment, then the new incoming requests have to be stopped at the next level, after leaving these processes and before arriving at the considered application. This is done by configuring the fuzzy expert system with the correct set of rules.

To be provided...

### 4.4.6 Processes Overload Treatment

To be provided...

### 5 Interfaces

*** Replace this line by the text body of the chapter ***

### 5.1 Overview

*** Replace this line by the text body of the chapter ***

### 5.2 User Interfaces

*** Replace this line by the text body of the chapter ***

### 5.3 Interfaces to other Systems

*** Replace this line by the text body of the chapter ***

### 5.4 External Interfaces

*** Replace this line by the text body of the chapter ***

### 5.5 Internal Interfaces

*** Replace this line by the text body of the chapter ***

### 6 Message Flows

### 7 Test Strategy

*** Replace this line by the text body of the chapter ***

### 8 Effects on other Systems

*** Replace this line by the text body of the chapter ***

### 8.1 <name of affected system n>

*** Replace this line by the text body of the chapter ***

### 9 Appendix

*** Replace this line by the text body of the chapter ***

| not_ag | equ 1+oper ; | NOT | ---> NOT |
| min_ag | equ 2+oper; | MIN | ---> AND |
| algp_ag | equ 3+oper ; | lgebraic product | ---> OR |
| max_ag | equ 4+oper ; | MAX | ---> OR |

(continued)

| | | | |
|---|---|---|---|
| algs_ag | equ 5+oper ; | algebraic sum | ---> OR |
| f_and_ag | equ 6+oper ; | fuzzy_and with gamma parameter | ---> AND/OR |
| f_or_ag | equ 7+oper ; | fuzzy_or with gamma parameter | ---> OR/AND |
| minmax_ag | equ 8+oper ; | min-max with gamma parameter | ---> OR/AND |
| prosum_ag | equ 9+oper ; | product-sum operator with gamma | ---> Gamma |
| gamma_ag | equ 10+oper ; | gamma operator | ---> Gamma |
| min_in | equ 11+oper ; | MIN | ---> AND |
| algp_in | equ 12+oper ; | algebraic product | ---> AND |
| minmax_in | equ 13+oper ; | min-max with gamma parameter | ---> Gamma |
| prosum_in | equ 14+oper ; | product-sum with gamma parameter | ---> Gamma |
| max_ac | equ 15+oper ; | max | ---> OR |
| algs_ac | equ 16+oper ; | algebraic sum | ---> OR |
| minmax_ac | equ 17+oper ; | min-max with gamma parameter | ---> Gamma |
| prosum_ac | equ 18+oper ; | product-sum with gamma parameter | ---> Gamma |
| cog_de | equ 19+oper ; | center of gravity | ---> COG |
| max_de | equ 20+oper ; | maximum of set | ---> MAX |
| heigh_de | equ 21+oper ; | height of set | ---> HEIGHT |

## 10 BULK

The functional blocks of the ISS functionality on OSP are shown in the figure below. The element covered by LM 43814 is the ISM.

*Figure 34:ISS Function split on OSP*

*Figure 35: Application software components on OSP*

SIP/PINT+ messages for the applications (e.g. TTM, CWI, CtD...) are received from the IP Network. The SIP stack terminates the protocol and parses these messages, authenticates them and transfers the data to ADF where the distribution of the messages is done. SIP: REGISTER messages are given to the ISM (ISS Session Manager) whereas the others (like SIP: OPTIONS, SIP: INVITE) are given to the relevant applications. The ISM handles the user registration data and stores the IP Address information and SUN (session related data, how the Client user can be reached). The applications like CtD, TTM or CWI are handling

- the authorization of the call and

- the feature logic.

Messages from/to the hiQ are sent as TCAP messages via CSS API and INAP Protocol Handler. The INAP Protocol Handler is responsible for the conversion of internal message format into TCAP messages and vice versa.
ISM has communication interfaces

- to ADF and
- to the ISS applications which requires a user Registration.

In V15S the ISS Session Manager will be used by the CWI application, only.

10.1.1.1 CtD Application (LM41899_IUS)

[Author : Mr.Heinrich]

**Intefaces in scope of LM41899**

Security Application

*Figure 36 Overview over affected interfaces*

*Figure 37 : Call Processing for CtD call (Basic Call)*

The load for the machine is a result of two factors: The average call rate (number of requests per time) and the average call duration. The product of both is the number of stable calls. Every stable call has its instances and entries in tables and need a certain amount of memory.

It is *not* intended to limit the *call rate* via Service API to a certain value, but the number of service logic instances to avoid lack of memory. The maximum number of active CtD sessions is configurable.

In case the maximum number of CtD sessions is reached, all incoming requests via Service API will be rejected with operation *reportError( overload )*.

[Author: Mr.Priem]

For the CtD application, new incoming requests should be stopped already within the PINT+ GW Application by setting the overload level of the PINT+ GW Application high enough to stop processing of new incoming requests.

If the PINT+ GW Application is shared by other applications than the CtD application and these applications have a higher service priority level, then the overload level of the CtD application shall be set so that it does not authorize new sessions and the PINT+ GW application shall stay as before.

Concretely, if the NOM detects an overload situation, it enters the OOM. The OOM then tests the overload status of the CtD application and the PINT+ GW application. If the CtD application is the only connected application to the PINT+ GW (see Rule 1), then the PINT+ GW application gets a higher overload level and starts rejecting new incoming requests. If the CtD application shares the PINT+ GW with other applications having a higher priority level (see Rule 2), then it becomes itself a higher overload level and starts itself rejecting new session attempts.

It can be translated into two fuzzy logic rules:

Rule 1:                             <u>AND</u>    CTD_ACTIVE_SESSIONS_HIGH

<u>IF</u>     OSP_OVERLOAD_HIGH               <u>AND</u>    (<u>NOT</u> PINT+GW_SHARE_HIGH)

<u>THEN</u> PINT+GW_OVERLOAD_LEVEL_HIGH

Rule 2:

IF      OSP_OVERLOAD_HIGH

AND    CTD_ACTIVE_SESSIONS_HIGH

AND    PINT+GW_SHARE_HIGH

THEN   CTD_OVERLOAD_LEVEL_HIGH

10.1.1.2 Application Distribution Function (ADF)

[K.Zilker, U.Quitter ]

The application distribution function (ADF) is an upgrade to the PINT gateway (SS:PIGTW) of the hiQ9400 V1-solution (see LM 41899 for more information). The programming language is JAVA with JDK 1.2.2.
The ADF is located as single process (JVM) on the OSP and has as basic tasks:

•    the control of SIP-related messages in both directions,

•    the mapping and distribution of service-related data to/from the service application ISM.

The location of ADF in the OSP can be found in Figure 34.
The ADF as direct interface partner to the Internet Session Manager (ISM) uses the ISM Service AP.
The ADF receives the SIP-message REGISTER with a service-type CWI (coded as an URL-parameter in the request-URI) and distributes it to the ISM application via the ISM Service API-message ISM_REGISTER. The ISM application acknowledges with the ISM Service API message ISM_REGISTER_RES, which includes the actual status of the ISM-entry. The communication between ADF and ISM application is session-based, i.e. ADF has to create and maintain a session for the lifetime of the communication-cycle receipt of REGISTER/sending of RESPONSE. The session is entered into the sessionList of the ADF. The data for identification of the session is the Call-ID received from the SIP-request.

[X.Priem]

## TTM Basic Call on OSP (all components)

*Figure 38: Call Processing for TTM call (Basic Call)*

### 10.1.2 Call Flows of the BO 340 Converged Realtime Services

We present here the call flows of all considered Services. This allows to simply determine the overload treatment per service.

• TTM V2

Figure 39: TTM Call establishment

We consider here the Talk-To-Me application.

Figure 40: TTM Call release (Unregister???)

● ICM

Figure 41: ICM registration and authorization

*Figure 42: ICM outgoing call establishment*

*Figure 43: ICM Call release for outgoing call*

Figure 44: ICM Incoming call

- CtC

*Figure 45: Initiation of an automatic conference*

Figure 46: A conferee starts monitoring

Figure 47: Add a conferee

Figure 48: A conferee hooks on

Figure 49: CtC private Chat

*Figure 50: CtC Create and join a synchronized surfing session*

Figure 51: URL modification for SyS

*Figure 52: End a conference when the CC hooks on*

- Freecall with Synchronized Surfing

Figure 53: Establishment of a Freecall with SyS (part 1)

Figure 54: Establishment of a Freecall with SyS (part 2)

Figure 55: SyS session with Freecall (part 1)

Figure 56: SyS session within Freecall (part 2)

Figure 57: End of Freecall session

• Prepaid Card Service (Internet initiated)

Figure 58: Prepaid Card Service call establishment (Internet initiated)

Figure 59: Prepaid Card Service call termination (for Internet initiated Prepaid call)

**PCU**

Overview of the functional softwere blooks building the PCU on CoPI.

*Figure 10-60: PCU software structure overview*

10.1.2.1 Connection Agent for VoIP trunking and RAS

The Connection Agent for VoIP trunking and RAS consists of definition of appropriate states and events and provides the Call processing logic to perform the required functionality. Therefore state-event coupling and handling of "connection-records" by specific "state-event-handlers" gets implemented.

The following fundamental scenarios are supported:

*Figure 10-61: Basic VoIP virtual trunking scenario*

Short description

**A-side:** MMP supplies the A-side CA with MG-TSAlias information within a SETUP_I message, which downloads the data via MGCP to the MG. The MG returns the IP/RTP address of the A-side to the CA. The CA sends a SETUP_ACK with the IP/RTP address of the MG back to MMP.

**B-side:** The SETUP_E message from the MMP contains the IP/RTP address of the A-side and the MG-TSAlias information for the B-side. The CA downloads these data to the MG. The MG returns its IP/RTP address to the CA, which transfers it to the A-side via transparent data in a FACILITY message.

**A-side:** When a FACILITY is received, the contained IP/RTP address of the B-side is downloaded to the MG in order to complete the connection data.

*Figure 10-62: Basic VoIP RAS scenario*

A TDM connected user wants to surf in the internet. In order to dial in, he sets up a Call with the E.164 number of his internet service provider. The MMP manages the switching within the TDM net and sends a SETUP_I message with RAS indication to the CA on the PCU. The MMP supports the CA further with TDM trunk and MG information (MG-TSAlias). The CA downloads the data to the MG, where the requested TDM-IP connection is created. The CA needs no exchange of IP addresses or Codec information with a partner CA since the Call consists only of a half Call from the CA point of view.

*Figure 10-63 :Logical position of CA for VoIP in system*

*Figure 64: A conferee hooks on*

Figure 65: CtC private Chat

*Figure 66: CtC Create and join a synchronized surfing session*

Figure 67: URL modification for SyS

*Figure 68: End a conference when the CC hooks on*

- Freecall with Synchronized Surfing

*Figure 69: Establishment of a Freecall with SyS (part 1)*

Figure 70: Establishment of a Freecall with SyS (part 2)

Figure 71: SyS session with Freecall (part 1)

*Figure 72: SyS session within Freecall (part 2)*

Figure 73: End of Freecall session

# EP 1 331 564 A1

- Prepaid Card Service (Internet initiated)

*Figure 74: Prepaid Card Service call establishment (Internet initiated)*

*Figure 75: Prepaid Card Service call termination (for Internet initiated Prepaid call)*

PCU

Overview of the functional software blocks building the PCU on CoPI.

*Figure 10-76: PCU software structure overview*

10.1.2.2 Connection Agent for VoIP trunking and RAS

The Connection Agent for VoIP trunking and RAS consists of definition of appropriate states and events and provides the Call processing logic to perform the required functionality. Therefore state-event coupling and handling of "connection-records" by specific "state-event-handlers" gets implemented.

The following fundamental scenarios are supported:

*Figure 10-77: Basic VoIP virtual trunking scenario*

Short description

**A-side:** MMP supplies the A-side CA with MG-TSAlias information within a SETUP_I message, which downloads the data via MGCP to the MG. The MG returns the IP/RTP address of the A-side to the CA. The CA sends a SETUP_ACK with the IP/RTP address of the MG back to MMP.

**B-side:** The SETUP_E message from the MMP contains the IP/RTP address of the A-side and the MG-TSAlias information for the B-side. The CA downloads these data to the MG. The MG returns its IP/RTP address to the CA, which transfers it to the A-side via transparent data in a FACILITY message.

**A-side:** When a FACILITY is received, the contained IP/RTP address of the B-side is downloaded to the MG in order to complete the connection data.

*Figure 10-78: Basic VoIP RAS scenario*

A TDM connected user wants to surf in the internet. In order to dial in, he sets up a Call with the E.164 number of his internet service provider. The MMP manages the switching within the TDM net and sends a SETUP_I message with RAS indication to the CA on the PCU. The MMP supports the CA further with TDM trunk and MG information (MG-TSAlias). The CA downloads the data to the MG, where the requested TDM-IP connection is created. The CA needs no exchange of IP addresses or Codec information with a partner CA since the Call consists only of a half Call from the CA point of view.

*Figure 10-79 :Logical position of CA for VoIP in system*

**Claims**

**1.** A method for controlling overload of a data processing system, comprising:

a) monitoring a load of said data processing system, whereby parameters for a degree of utilisation of resources of said data processing system are determined, and
b) running an overload operation mode (OOM) of said data processing system, including the steps of

1) feeding said parameters into a fuzzy logic expert system, which comprises a fuzzy rule base having rules and associated fuzzy logic variables,
2) identifying important rules among said rule base in accordance with said parameters via said fuzzy logic expert system, and
3) calculating values for the fuzzy logic variables, which are associated with the important rules, and
4) handling the overload based on the identified rules and the calculated values of said associated fuzzy logic variables.

**2.** The method according to claim 1, further comprising:

running a normal operation mode (NON) of said data processing system,

**3.** The method according to claim 2, further comprising:

monitoring the load of said data processing system, including the steps of

a) determining parameters for said degree of utilisation of resources of said data processing system in both the normal operation mode and the overload operation mode, and
b) feeding said parameters into said fuzzy logic expert system.
c) determining additional application specific parameters, which refer to the degree of utilisation of resources by applications running on said data processing system, in the overload operation mode, and
d) feeding said application specific parameters into said fuzzy logic expert system.

**4.** The method according to claim 3, further comprising:

a) determining an overload level via said fuzzy logic expert system based on said parameters and/or said application specific parameters, and
b using said overload level as criterion for switching between the normal operation mode (NOM) and the overload operation mode (OOM).

**5.** The method according to one of the claims 1 to 3, wherein the monitoring of the load of said data processing system is performed according to a clock rate, which is higher in the overload operation mode than in the normal operation mode.

**6.** The method according to one of the claims 1 to 5, wherein the degree of utilisation of at least one of the following resources is monitored: CPU load, memory utilisation, I/O load.

**European Patent Office**

## EUROPEAN SEARCH REPORT

Application Number

EP 02 00 1720

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | AYYASH S A ET AL: "An expert system approach to load balancing in a distributed environment" CIRCUITS AND SYSTEMS, 1993., PROCEEDINGS OF THE 36TH MIDWEST SYMPOSIUM ON DETROIT, MI, USA 16-18 AUG. 1993, NEW YORK, NY, USA,IEEE, 16 August 1993 (1993-08-16), pages 1320-1323, XP010119971 ISBN: 0-7803-1760-2 * page 1320, right-hand column, line 24 - line 40 * * page 1321, left-hand column, line 7 - page 1323, left-hand column, line 16 * | 1,5,6 | G06F9/50 |
| A | EP 0 697 779 A (SIEMENS AG) 21 February 1996 (1996-02-21) * the whole document * | 1,3 | |
| A | KUMAR A ET AL: "A MODEL FOR DISTRIBUTED DECISION MAKING: AN EXPERT SYSTEM FOR LOAD BALANCING IN DISTRIBUTED SYSTEMS" PROCEEDINGS OF THE ANNUAL INTERNATIONAL COMPUTER SOFTWARE AND APPLICATIONS CONFERENCE. (COMPSAC). TOKYO, OCT. 7 - 9, 1987, WASHINGTON, IEEE COMP. SOC. PRESS, US, vol. CONF. 11, 7 October 1987 (1987-10-07), pages 507-513, XP000043621 * page 510, left-hand column, line 11 - page 511, right-hand column, line 40 * | 1 | **TECHNICAL FIELDS SEARCHED (Int.Cl.7)** G06F |
| A | US 5 758 028 A (BAKEMAN DAVID ET AL) 26 May 1998 (1998-05-26) * column 2, line 46 - column 3, line 6 * | 1 | |

The present search report has been drawn up for all claims

| Place of search | Date of completion of the search | Examiner |
|---|---|---|
| THE HAGUE | 7 January 2003 | Michel, T |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

&  : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 02 00 1720

This annex lists the patent family membersrelating to the patent documents cited in the above-mentioned European search report.
The members are as contained in the European Patent Office EDP file on
The European Patent Office is in no way liable for these particulars which are merely given for the purpose of information.

07-01-2003

| Patent document cited in search report | | Publication date | Patent family member(s) | | Publication date |
|---|---|---|---|---|---|
| EP 0697779 | A | 21-02-1996 | DE<br>EP | 4425348 C1<br>0697779 A1 | 12-10-1995<br>21-02-1996 |
| US 5758028 | A | 26-05-1998 | NONE | | |

EPO FORM P0459

For more details about this annex : see Official Journal of the European Patent Office, No. 12/82